(19) Europäisches Patentamt
European Patent Office
Office européen des brevets

(11) **EP 4 328 649 A1**

(12) **EUROPEAN PATENT APPLICATION**
published in accordance with Art. 153(4) EPC

(43) Date of publication:
**28.02.2024 Bulletin 2024/09**

(21) Application number: **22806662.7**

(22) Date of filing: **07.05.2022**

(51) International Patent Classification (IPC):
**G02B 26/08** (2006.01)

(52) Cooperative Patent Classification (CPC):
**G02B 26/08**

(86) International application number:
**PCT/CN2022/091559**

(87) International publication number:
**WO 2022/237696 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2021 CN 202110529736
06.08.2021 CN 202110900524**

(71) Applicant: **Huawei Technologies Co., Ltd.
Longgang
Shenzhen, Guangdong 518129 (CN)**

(72) Inventors:
• **ZHAO, Fei**
**Shenzhen, Guangdong 518129 (CN)**
• **CHU, Huai Yuan**
**Shenzhen, Guangdong 518129 (CN)**
• **XU, Jinghui**
**Shenzhen, Guangdong 518129 (CN)**
• **WU, Jiahao**
**Shenzhen, Guangdong 518129 (CN)**

(74) Representative: **Epping - Hermann - Fischer
Patentanwaltsgesellschaft mbH
Schloßschmidstraße 5
80639 München (DE)**

(54) **MICROMIRROR ASSEMBLY AND LASER DEVICE**

(57) A micromirror assembly (001) and a laser device (0001) are provided, and may be used in a self-driving vehicle, an intelligent robot, VR/AR, or the like. The micromirror assembly (001) includes a first position-limiting part (200), a micromirror chip (100), and a second position-limiting part (300) that are stacked. The micromirror chip (100) includes a fastening frame (103), a movable part (101), and a first cantilever (102), where the movable part (101) is connected to the fastening frame (103) by the first cantilever (102). The first position-limiting part (200) and the second position-limiting part (300) are separately connected to the fastening frame (103), the first position-limiting part (200) and the second position-limiting part (300) have a hollow area, and the hollow areas are opposite to the movable part (101). The first position-limiting part (200) is configured to absorb shock on a collision with the micromirror chip (100), and a projection of a collision part of the first position-limiting part (200) on the micromirror chip (100) intersects with a central axis of the first cantilever (102). The second position-limiting part (300) is configured to absorb shock on a collision with the micromirror chip (100).

FIG. 7

# Description

This application claims priorities to Chinese Patent Application No. 202110900524.6, filed with the China National Intellectual Property Administration on August 6, 2021 and entitled "MICROMIRROR ASSEMBLY AND LASER DEVICE", and to Chinese Patent Application No. 202110529736.8, filed with the China National Intellectual Property Administration on May 14, 2021 and entitled "MICROMIRROR ASSEMBLY AND LASER DEVICE", both of which are incorporated herein by reference in their entireties.

## TECHNICAL FIELD

Embodiments of this application relate to the field of micro-electro-mechanical technologies, and in particular, to a micromirror assembly and a laser device.

## BACKGROUND

Micro-electro-mechanical system (Micro-Electro-Mechanical System, MEMS) micromirrors can implement one-dimensional or two-dimensional optical beam scanning through torsion, and currently are widely used in 3D scanning, laser display, LiDAR, and the like. The MEMS micromirrors feature low costs, low energy consumption, high precision, a large angle of rotation, and high reliability. The MEMS micromirrors are mainly actuated in four ways: electrostatically actuated, electromagnetically actuated, piezoelectrically actuated, and electrothermally actuated.

The MEMS micromirror includes, for example, a fastening frame, a micromirror, and a cantilever. The movable part is connected to the fastening frame by the cantilever. When the cantilever twists, the micromirror may rotate relative to the fastening frame.

The MEMS micromirror may be used for LiDAR and configured on a vehicle.

However, the vehicle in motion is prone to have low-frequency vibration. Due to the vibration of the vehicle, the micromirror undergoes a large displacement in a vertical direction. In this case, stress to which a cantilever is subjected is far greater than yield stress of a material. As a result, the cantilever is prone to fracturing under force, affecting performance of the MEMS micromirror.

In addition, the MEMS micromirrors used for LiDAR need to pass automotive-grade reliability tests. With reference to the current AEC-Q100 standard, there is a high requirement for shock and vibration. Large-size MEMS micromirrors currently available are almost unlikely to pass automotive-grade tests to be actually used.

## SUMMARY

Embodiments of this application provide a micromirror assembly and a laser device, to resolve a problem that vibration and shock affect performance of a micromirror.

To achieve the foregoing objective, the following technical solutions are used in embodiments of this application. According to a first aspect of embodiments of this application, a micromirror assembly is provided, including a first position-limiting part, a micromirror chip, and a second position-limiting part that are stacked. The micromirror chip includes a fastening frame, a movable part, and a first cantilever, where the movable part is connected to the fastening frame by the first cantilever. The first position-limiting part and the second position-limiting part are separately connected to the fastening frame, the first position-limiting part and the second position-limiting part have a hollow area, and the hollow areas are opposite to the movable part. The first position-limiting part is configured to absorb shock on a collision with the micromirror chip, and a projection of a collision part of the first position-limiting part on the micromirror chip intersects with a central axis of the first cantilever. The second position-limiting part is configured to absorb shock on a collision with the micromirror chip. Therefore, with the first position-limiting part and the second position-limiting part disposed, a displacement of a micromirror in a vertical direction can be limited, so that maximum stress to which the micromirror chip is subjected does not exceed yield strength of a material, and the micromirror chip can pass vibration and shock tests.

In an optional implementation, a distance between the second position-limiting part and a device layer of the micromirror chip is greater than a distance between the first position-limiting part and a substrate layer of the micromirror chip, there is a protruding first position-limiting structure on the micromirror chip, and the first position-limiting structure is configured to absorb shock on a collision with the second position-limiting part. A projection of a part that is of the first position-limiting structure and that collides with the second position-limiting part on the micromirror chip intersects with the central axis of the first cantilever. In a further optional implementation, the projection of the part that is of the first position-limiting structure and that collides with the second position-limiting part on the micromirror chip is symmetrical about the central axis of the first cantilever. The first position-limiting structure is protruding and as far away from a sensitive structure of the chip as possible, reducing impact of collision stress on the chip. In addition, a point at which the first position-limiting structure and the second position-limiting part collide is made close to a middle position of the micromirror chip, implementing more even distribution of stress. Moreover, when the cantilever of the micromirror rotates, a center undergoes a smallest displacement. With the point of collision close to the center, both limitation of an angle of torsion, and a distance of collision can be minimized, reducing the collision stress and implementing a micromirror with a larger angle or a larger mirror surface.

In an optional implementation, a distance between the first position-limiting part and the device layer of the micromirror chip is less than a distance between the first position-limiting part and the substrate layer of the micromirror chip, there is a first protrusion on the first position-limiting part, and the first protrusion is configured to absorb shock on a collision with the device layer of the micromirror chip. In this way, the first protrusion can be used as a contact part of collision, further improving shock resistance of the micromirror assembly.

In an optional implementation, a projection of the first protrusion on the micromirror chip intersects with the central axis of the first cantilever. In a further optional implementation, the projection of the first protrusion on the micromirror chip is symmetrical about the central axis of the first cantilever. In this way, a point at which the first protrusion and the micromirror chip collide is made close to the middle position of the micromirror chip, implementing more even distribution of stress. Moreover, when the cantilever of the micromirror rotates, the center undergoes a smallest displacement. With the point of collision close to the center, both limitation of the angle of torsion, and a distance of collision can be minimized, reducing the collision stress and implementing a micromirror with a larger angle or a larger mirror surface.

In an optional implementation, there is a first stopper part between the first cantilever and the movable part, the first protrusion is opposite the first stopper part, and the first protrusion is configured to absorb shock on a collision with the first stopper part. A position at which the first cantilever and the movable part are connected, and the movable part are a region with a large change in displacement. Therefore, with the first stopper part disposed between the first cantilever and the movable part to cooperate with the first position-limiting part and the second position-limiting part, damage to the micromirror chip due to excessive deformation can be effectively avoided.

In an optional implementation, a width of the first stopper part is greater than a width of the first cantilever. In this way, with the width of the first stopper part increased, a contact surface of collision can be increased, reducing stress generated due to vibration and shock.

In an optional implementation, the first stopper part is disposed on two sides of the position at which the first cantilever and the movable part are connected. In an optional implementation, there is also a first avoidance groove on the first position-limiting part, an opening of the first avoidance groove is opposite the first stopper part, and the first protrusion is provided in the first avoidance groove. In this way, the first protrusion can be used as a contact part of collision. With the first avoidance groove provided on the first position-limiting part that is around the first protrusion, the micromirror chip can twist normally, without being blocked by the first position-limiting part.

In an optional implementation, the first protrusion is located in the hollow area of the first position-limiting part. In this way, with the first protrusion provided in the hollow area, the micromirror chip can twist normally, without being blocked by the first position-limiting part.

In an optional implementation, there is a protruding second position-limiting structure on the micromirror chip, and the first position-limiting part is configured to absorb shock on a collision with the second position-limiting structure. In this way, the second position-limiting structure can be used as a contact part of collision, further improving shock resistance of the micromirror assembly.

In an optional implementation, a projection of the second position-limiting structure on the micromirror chip intersects with the central axis of the first cantilever. In a further optional implementation, the projection of the second position-limiting structure on the micromirror chip is symmetrical about the central axis of the first cantilever. In this way, a point at which the second position-limiting structure and the first position-limiting part collide is made close to the middle position of the micromirror chip, implementing more even distribution of stress. Moreover, when the cantilever of the micromirror rotates, the center undergoes a smallest displacement. With the point of collision close to the center, both limitation of the angle of torsion, and a distance of collision can be minimized, reducing the collision stress and implementing a micromirror with a larger angle or a larger mirror surface.

In an optional implementation, there is a first position-limiting structure on a surface that is of the micromirror chip and that is away from the first position-limiting part, the first position-limiting structure is located at the position at which the first cantilever and the movable part are connected, the second position-limiting part is opposite the first position-limiting structure, and the second position-limiting part is configured to absorb shock on a collision with the first position-limiting structure. In this way, the first position-limiting structure can be used as a contact part of collision, further improving shock resistance of the micromirror assembly.

In an optional implementation, the second position-limiting part is of a flat plate structure. In this way, there is no need to dispose another structure on a surface of the second position-limiting part, featuring a simpler process.

In an optional implementation, there are a second protrusion and a second avoidance groove on the second position-limiting part, an opening of the second avoidance groove is opposite the position-limiting structure, and the second protrusion is provided in the second avoidance groove. In this way, the second protrusion and the second avoidance groove can be of structures similar to the first protrusion and the first avoidance groove, featuring a simple process.

In an optional implementation, there is a second protrusion on the second position-limiting part, the second protrusion is opposite the position-limiting structure, and the second protrusion is located in the hollow area of the second position-limiting part. In this way, the second protrusion can be of a structure similar to the first protrusion, featuring a simple process.

In an optional implementation, there is a first position-limiting structure on a surface that is of the movable part and that is away from the first position-limiting part, the second position-limiting part is opposite the first position-limiting structure, and the second position-limiting part is configured to absorb shock on a collision with the first position-limiting structure. In this way, the first position-limiting structure can be used as a contact part of collision, further improving shock resistance of the micromirror assembly.

In an optional implementation, there are a second protrusion and a second avoidance groove on the second position-limiting part, an opening of the second avoidance groove is opposite the first position-limiting structure, and the second protrusion is provided in the second avoidance groove. In this way, the second protrusion and the second avoidance groove can be of structures similar to the first protrusion and the first avoidance groove, featuring a simple process.

In an optional implementation, there is a second protrusion on the second position-limiting part, the second protrusion is opposite the first position-limiting structure, and the second protrusion is located in the hollow area of the position-limiting part. In this way, the second protrusion can be of a structure similar to the first protrusion, featuring a simpler process.

In an optional implementation, a projection of the second protrusion on the micromirror chip intersects with the central axis of the first cantilever. In a further optional implementation, the projection of the second protrusion on the micromirror chip is symmetrical about the central axis of the first cantilever. In this way, a point at which the second protrusion and the micromirror chip collide is made close to the middle position of the micromirror chip, implementing more even distribution of stress. Moreover, when the cantilever of the micromirror rotates, the center undergoes a smallest displacement. With the point of collision close to the center, both limitation of the angle of torsion, and a distance of collision can be minimized, reducing the collision stress and implementing a micromirror with a larger angle or a larger mirror surface.

In an optional implementation, the movable part includes the micromirror, and the micromirror is connected to the fastening frame by the first cantilever. In this case, the micromirror is a one-dimensional micromirror, and the anti-collision structure may be used on the one-dimensional micromirror.

In an optional implementation, the movable part further includes a movable frame, the movable frame is disposed around the micromirror, the fastening frame is disposed around the movable frame, the movable frame is connected to the micromirror by a second cantilever, and the movable frame is connected to the fastening frame by the first cantilever. In this case, the micromirror is a two-dimensional micromirror, and the anti-collision structure may be used on the two-dimensional micromirror.

In an optional implementation, an outer frame is disposed outside the micromirror, the outer frame is fastened to the micromirror, and the outer frame may be configured to enhance protection of the micromirror structure or for disposing of an actuating structure.

In an optional implementation, the first position-limiting part is connected to the fastening frame by a first adhesive layer, and a height of a gap between the first position-limiting part and the micromirror chip is equal to a thickness of the first adhesive layer. In this way, the first position-limiting part can be integrated onto the micromirror chip through adhesive dispensing, limiting a displacement of the micromirror chip in the vertical direction and improving shock resistance of the chip. The thickness of the first adhesive layer determines the height of the gap between the first position-limiting part and the micromirror chip. Therefore, the height of the gap between the first position-limiting part and the micromirror chip can be controlled by controlling the thickness of the adhesive layer.

In an optional implementation, the first adhesive layer is filled with hard particles. In this way, a thickness of a dispensed adhesive can be controlled by doping fixed-size particles into the first adhesive layer.

In an optional implementation, the first position-limiting part is bonded to the fastening frame. In this way, the first position-limiting part can be integrated onto the micromirror chip through bonding, limiting the displacement of the micromirror in the vertical direction and improving shock resistance of the chip.

In an optional implementation, the second position-limiting part is connected to the fastening frame by a second adhesive layer, and a height of a gap between the second position-limiting part and the micromirror chip is equal to a thickness of the second adhesive layer. In this way, the second position-limiting part can be integrated onto the micromirror chip through adhesive dispensing, limiting the displacement of the micromirror in the vertical direction and improving shock resistance of the chip. The thickness of the second adhesive layer determines the height of the gap between the second position-limiting part and the micromirror chip. Therefore, the height of the gap between the second position-limiting part and the micromirror chip can be controlled by controlling the thickness of the adhesive layer.

In an optional implementation, the second adhesive layer is filled with hard particles. In this way, a thickness of a dispensed adhesive can be controlled by doping fixed-size particles into the second adhesive layer.

In an optional implementation, the second position-limiting part is bonded to the fastening frame. In this way, the second position-limiting part can be integrated onto the micromirror chip through bonding, limiting the displacement of the micromirror in the vertical direction and improving shock resistance of the chip.

In an optional implementation, of a surface that is of the first position-limiting part and that is opposite the micromirror chip, a surface that is of the second position-limiting part and that is opposite the micromirror chip, and surfaces of the micromirror chip, at least one surface or a collision part of at least one surface is plated or pasted with a cushioning part. A material of the cushioning part includes but is not limited to Parylene (Parylene) or polydimethylsiloxane PDMS, rubber, flexible plastic, and the like. In this way, collision cushioning can be improved, and collision stress can be reduced.

In an optional implementation, materials of the first position-limiting part and the second position-limiting part are any one or more of silicon, silica, ceramic, alumina, metal, plastic, or rubber. In this way, material selection for the first position-limiting part and the second position-limiting part is more flexible, and therefore, the first position-limiting part and the second position-limiting part are applicable to a plurality of micromirror assemblies.

In an optional implementation, there are one or more first position-limiting parts. In this case, the first position-limiting part is of a more flexible structure and can be used in a wider range.

In an optional implementation, there are one or more second position-limiting parts. In this case, the second position-limiting part is of a more flexible structure and can be used in a wider range.

In an optional implementation, the micromirror chip includes a plurality of groups of movable parts and a plurality of groups of first cantilevers, and at least one group that includes the movable part and the first cantilever is provided with the first position-limiting part and the second position-limiting part for position limiting and shock absorption on a collision.

In an optional implementation, there is a first alignment mark on the surface that is of the micromirror chip and that is close to the first position-limiting part, and the first alignment mark is used to position the first position-limiting part; and there is a second alignment mark on the surface that is of the second position-limiting part and that is close to the micromirror chip, and the second alignment mark is used to position the micromirror chip. In this way, with the first alignment mark provided, the first position-limiting part can be positioned, and with the second alignment mark provided, the micromirror chip can be positioned, improving precision of alignment during assembly and reducing difficulty of assembly.

In an optional implementation, the micromirror chip includes a first electrode, there is a second electrode on the first position-limiting part or the second position-limiting part, and the first electrode is connected to the second electrode by a lead. In this case, an electrode and a lead may be disposed on the first position-limiting part or the second position-limiting part in advance, to assist in lead bonding of the chip.

In an optional implementation, the part that is of the first position-limiting part and that collides with the micromirror chip is connected to the first position-limiting part by a first movable arm. In this way, stress generated due to a collision can be reduced, improving shock resistance of the micromirror assembly.

In an optional implementation, the part that is of the second position-limiting part and that collides with the micromirror chip is connected to the first position-limiting part by a second movable arm. In this way, stress generated due to a collision can be reduced, improving shock resistance of the micromirror chip.

In an optional implementation, the second position-limiting part further includes a peripheral area, the peripheral area surrounds an outer border of the micromirror chip, and the peripheral area is provided with a hollow-out structure. In this way, a stress in a chip package can be released, avoiding damage to or failure of the chip.

According to a second aspect of embodiments of this application, a laser device is provided, including a laser and the micromirror assembly described above. The micromirror assembly is configured to reflect a laser light emitted by the laser. In this way, the laser device uses the micromirror assembly, improving reliability and stability of the laser device.

According to a third aspect of embodiments of this application, a vehicle is provided. The vehicle includes a vehicle itself and the laser device described above. The laser device is disposed on the vehicle itself. In this way, the vehicle uses the laser device, featuring better device stability and improving precision of laser scanning.

## BRIEF DESCRIPTION OF DRAWINGS

FIG. 1 is a schematic diagram of a working state of a laser device;
FIG. 2 is a schematic diagram of a structure of a micromirror chip;
FIG. 3 is a schematic diagram of a working state of a micromirror chip in a torsional mode;
FIG. 4 is a simplified schematic diagram of a structure in FIG. 3;
FIG. 5 is a schematic diagram of a working state of a micromirror chip in a vibrational mode;
FIG. 6 is a simplified schematic diagram of a structure in FIG. 5;
FIG. 7 is a schematic diagram of a structure of a micromirror assembly according to an embodiment of this application;
FIG. 8 is a schematic diagram of a torn-down structure of a micromirror assembly in FIG. 7;
FIG. 9 is a schematic diagram of a torn-down structure of a micromirror chip in FIG. 7;
FIG. 10a is a schematic diagram of a structure of a first position-limiting part;
FIG. 10b is a partial enlargement view of a first position-limiting part in FIG. 10a;

FIG. 11 is a flowchart of a method for producing a first position-limiting part according to an embodiment of this application;

FIG. 11a and FIG. 11b are schematic diagrams of product structures that are obtained after steps in FIG. 11 are performed, respectively;

FIG. 12 is a schematic diagram of a three-dimensional structure of a micromirror chip;

FIG. 13 is a front view of a micromirror chip in FIG. 12;

FIG. 14a is a schematic diagram of a structure of a micromirror chip according to an embodiment of this application;

FIG. 14b is a schematic diagram of a structure of another micromirror chip according to an embodiment of this application;

FIG. 15 is a view of a section A-A of a micromirror assembly in FIG. 7;

FIG. 16 is a schematic diagram of a structure of another micromirror chip according to an embodiment of this application;

FIG. 17 is a schematic diagram of a structure of a first position-limiting part according to an embodiment of this application;

FIG. 18a is a view of a section B-B of a micromirror chip in FIG. 16 and a first position-limiting part in FIG. 17;

FIG. 18b is a schematic diagram of an in-use state of a micromirror chip in FIG. 18a;

FIG. 19 is a perspective view of another first position-limiting part according to an embodiment of this application;

FIG. 19a is a schematic diagram of a structure of a first position-limiting part in FIG. 19;

FIG. 19b is a schematic diagram of a structure of another first position-limiting part according to an embodiment of this application;

FIG. 20a is a view of a section B-B of a micromirror chip in FIG. 16 and a first position-limiting part in FIG. 19a;

FIG. 20b is a schematic diagram of an in-use state of a micromirror chip in FIG. 20a;

FIG. 21a is a schematic diagram of a structure of another second position-limiting part according to an embodiment of this application;

FIG. 21b is a partial enlargement view of a region A in FIG. 21a;

FIG. 22 is a perspective view of a second position-limiting part according to an embodiment of this application;

FIG. 22a is a flowchart of a method for producing a second position-limiting part according to an embodiment of this application;

FIG. 22b and FIG. 22c are schematic diagrams of product structures that are obtained after steps in FIG. 22a are performed, respectively;

FIG. 22d is a partial enlargement view of a region D in FIG. 22;

FIG. 23 is a schematic diagram of a structure of another micromirror chip according to an embodiment of this application;

FIG. 24a is a schematic diagram of a structure of a second position-limiting part according to an embodiment of this application;

FIG. 24b is a schematic diagram of a structure of another second position-limiting part according to an embodiment of this application;

FIG. 24c is a schematic diagram of a structure of another second position-limiting part according to an embodiment of this application;

FIG. 24d is a schematic diagram of a structure of another second position-limiting part according to an embodiment of this application;

FIG. 24e is a view of a section C-C of a micromirror chip in FIG. 23 and a second position-limiting part in FIG. 24a;

FIG. 25 is a perspective view of another micromirror chip according to an embodiment of this application;

FIG. 26 is a schematic diagram of a structure of a micromirror chip in FIG. 25;

FIG. 27a is a view of a section D-D of a micromirror chip in FIG. 26 and a second position-limiting part in FIG. 24d;

FIG. 27b is a schematic diagram of an in-use state of a micromirror chip in FIG. 27a;

FIG. 28 is a view of a section D-D of a micromirror chip in FIG. 26 and a second position-limiting part in FIG. 24c;

FIG. 29a is a schematic diagram of a structure of another second position-limiting part according to an embodiment of this application;

FIG. 29b is a partial enlargement view of a region B in FIG. 29a;

FIG. 30a is a schematic diagram of a structure of another micromirror chip according to an embodiment of this application;

FIG. 30b is a schematic diagram of a structure of another micromirror chip according to an embodiment of this application;

FIG. 31a is a diagram of a comparison of simulation results of displacements of cantilevers in a case in which a first position-limiting part and a second position-limiting part are absent and a case in which a first position-limiting part and a second position-limiting part are present;

FIG. 31b is a diagram of a comparison of simulation results of maximum stress of cantilevers in a case in which a first position-limiting part and a second position-limiting part are absent and a case in which a first position-limiting part and a second position-limiting part are present;

FIG. 32 is a schematic diagram of a structure of a one-dimensional micromirror according to an embodiment of this application;

FIG. 33 is a schematic diagram of a structure of another one-dimensional micromirror according to an embodiment of this application;

FIG. 34 is a schematic diagram of a structure of another one-dimensional micromirror according to an embodiment of this application;

FIG. 35 is a schematic diagram of a structure of a two-dimensional micromirror according to an embodiment of this application;

FIG. 36 is a schematic diagram of a structure of another two-dimensional micromirror according to an embodiment of this application;

FIG. 37 is a schematic diagram of a structure of another micromirror assembly according to an embodiment of this application;

FIG. 38 is a schematic diagram of a structure of another two-dimensional micromirror according to an embodiment of this application;

FIG. 39 is a schematic diagram of a structure of another two-dimensional micromirror according to an embodiment of this application;

FIG. 40 is a schematic diagram of a structure of another micromirror assembly according to an embodiment of this application;

FIG. 41 is a schematic diagram of a structure of another micromirror assembly according to an embodiment of this application;

FIG. 42 is a schematic diagram of a structure of another micromirror assembly according to an embodiment of this application;

FIG. 43 is a schematic diagram of a structure of another second position-limiting part according to an embodiment of this application;

FIG. 44 is a schematic diagram of a structure of another second position-limiting part according to an embodiment of this application;

FIG. 45 is a schematic diagram of alignment marks of a micromirror assembly according to an embodiment of this application;

FIG. 46 is a schematic diagram of an alignment mark of a micromirror chip according to an embodiment of this application;

FIG. 47 is a schematic diagram of an alignment mark of a second position-limiting part according to an embodiment of this application;

FIG. 48 is a schematic diagram of alignment marks of a second position-limiting part and a micromirror chip according to an embodiment of this application;

FIG. 49 is a schematic diagram of a structure of another micromirror assembly according to an embodiment of this application;

FIG. 50 is a schematic diagram of a structure of a second position-limiting part in FIG. 49; and

FIG. 51 is a schematic diagram of a working state of a vehicle according to an embodiment of this application.

## DESCRIPTION OF EMBODIMENTS

To make objectives, technical solutions, and advantages of this application clearer, the following further describes this application in detail with reference to the accompanying drawings.

Terms such as "first" and "second" in the following description are merely intended for a purpose of description, and shall not be understood as an indication or implication of relative importance or implicit indication of a quantity of indicated technical features. Therefore, a feature limited by "first", "second", or the like may explicitly or implicitly indicate that one or more such features are included. In the description of this application, "a plurality of" means two or more unless otherwise specified.

In addition, in this application, directional terms such as "up" and "down" are defined relative to positions in which parts are schematically placed in the accompanying drawings. It should be understood that these directional terms are relative concepts, are used to describe and clarify relativity, and may vary with positions in which parts are placed in the accompanying drawings.

An embodiment of this application provides a micromirror assembly. The micromirror assembly may be used in a laser device, and is commonly used in a self-driving vehicle, an intelligent robot, VR/AR, or the like.

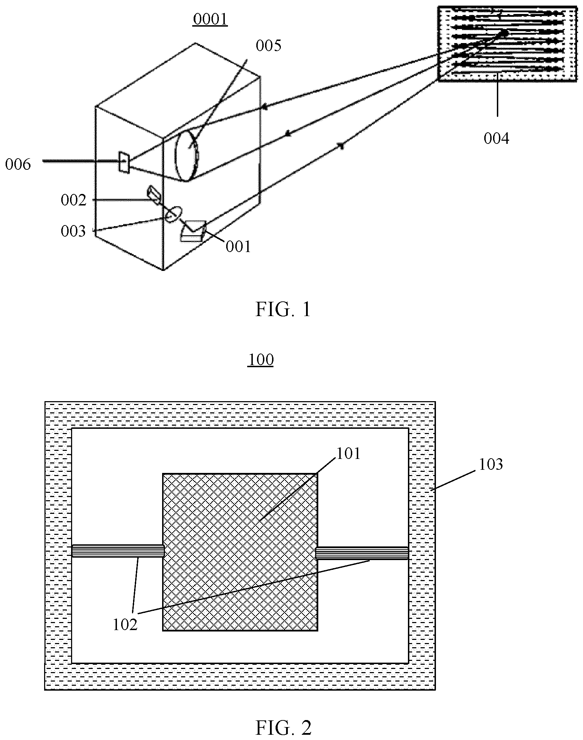

FIG. 1 is a schematic diagram of a structure of a laser device. As shown in FIG. 1, the laser device may be LiDAR. The laser device 0001 includes a laser 002 and a micromirror assembly 001. Pulsed optical signals emitted by the laser 002 are collimated by a collimator 003 and are incident on the micromirror assembly 001. The micromirror assembly 001 rotates quickly, scans the optical signals, and emits the optical signals to a surrounding target object 004, completing detection of a surrounding environment. After being reflected by the target object 004, scanned light is converged by a lens 005 and then received by a receiver 006.

The micromirror assembly is a core part of LiDAR. Performance of the micromirror assembly directly determines quality of a scanned and projected image.

In some embodiments, the micromirror assembly 001 includes a micromirror chip.

FIG. 2 is a schematic diagram of a structure of a micromirror chip. As shown in FIG. 2, the micromirror chip 100 includes a movable part 101, a first cantilever 102, and a fastening frame 103. The movable part 101 is connected to the fastening frame 103 by the first cantilever 102. When the cantilever twists, the movable part 101 may rotate relative to the fastening frame 103.

When the micromirror chip 100 works, lower-order motion modes of the micromirror chip 100 may be divided into a torsional mode and a vibrational mode.

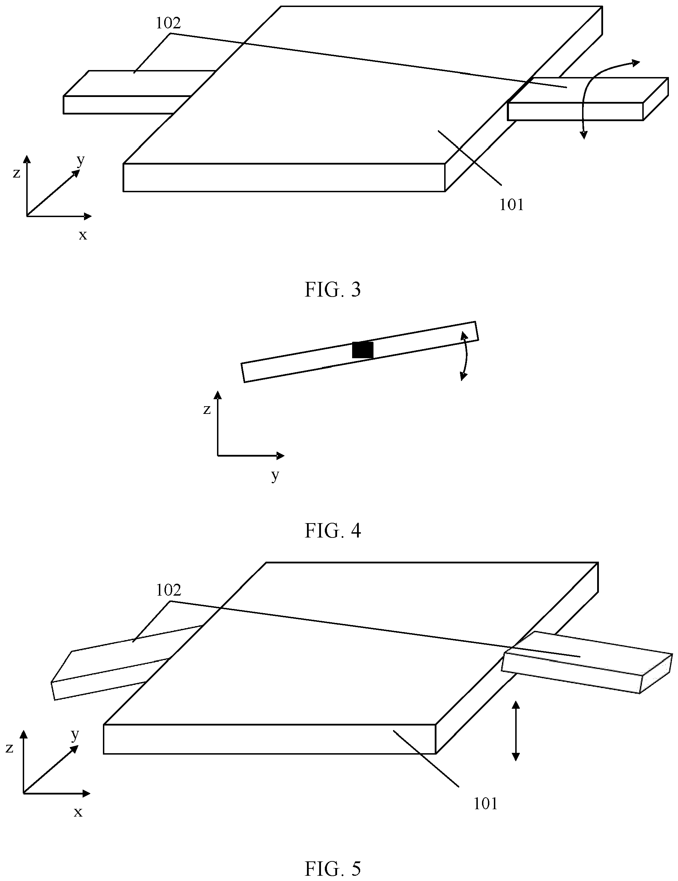

FIG. 3 is a schematic diagram of a working state of the micromirror chip in the torsional mode. FIG. 4 is a simplified schematic diagram of a structure in FIG. 3. As shown in FIG. 3 and FIG. 4, in the torsional mode, the movable part 101 and the first cantilever 102 rotate around an axis of rotation, and an angle of rotation is related to a torsional force to which the micromirror chip is subjected.

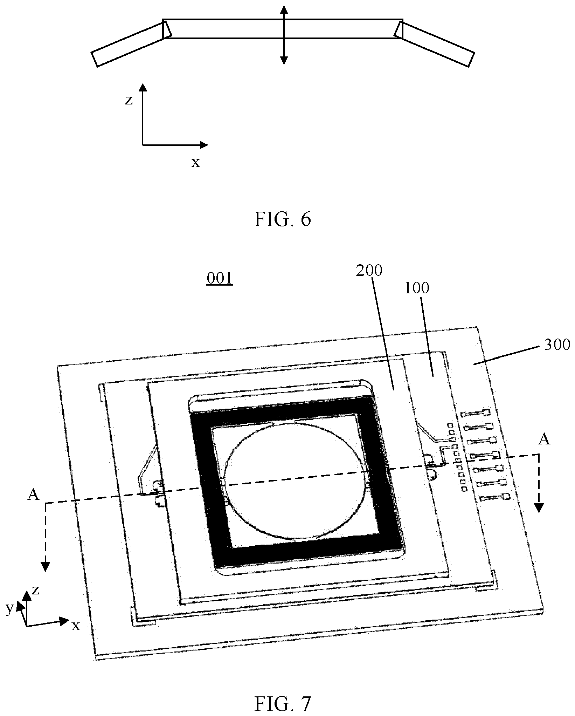

FIG. 5 is a schematic diagram of a working state of the micromirror chip in the vibrational mode. FIG. 6 is a simplified schematic diagram of a structure in FIG. 5. As shown in FIG. 5 and FIG. 6, in the vibrational mode, the movable part 101 and the first cantilever 102 vibrate, and an amplitude of vibration is related to a vibrational force of the micromirror chip.

The micromirror chip is usually of a symmetrical structure. In the torsional mode, torques produced by acceleration of shock or vibration are symmetrical about the micromirror chip and can cancel each other out. In addition, a micromirror is designed to work in a rotational mode. Therefore, the micromirror chip is highly resistant to torsion and is not prone to excessive deformation or rotation.

In the vibrational mode, forces produced by acceleration of shock or vibration act entirely on the micromirror chip and cannot cancel each other out. When shock or vibration is on a large order of magnitude, the first cantilever 102 is prone to excessive deformation or damage.

When LiDAR is disposed on a vehicle or an intelligent robot, the vehicle or intelligent machine is prone to low-frequency vibration in a working state. Due to a pattern of vibrating up and down, a micromirror is deformed greatly and undergoes a large displacement in a direction Z in shock and vibration tests. In this case, stress to which a cantilever is subjected is far greater than yield stress of a material. As a result, the cantilever of the micromirror fractures and is damaged, failing automotive-grade tests or shock and vibration tests required for the intelligent robot.

For automotive-grade reliability tests, refer to the current AEC-Q100 standard.

AEC-Q100 standard for shock: 1500 g acceleration, shock half-wave duration of 0.5 ms, and no failure for five shock tests when a device does not work.

AEC-Q100 standard for vibration: when a device does not work: sweeping from 20 Hz to 2000 Hz and to 20 Hz cyclically, four times in each orientation of X, Y, and Z, 50 g peak acceleration, and not less than 4 minutes for each scanning.

An embodiment of this application provides an improved micromirror chip 100, to resolve a problem that a micromirror chip 100 is damaged due to excessive stress under shock or vibration, without affecting normal operating performance of the micromirror chip 100.

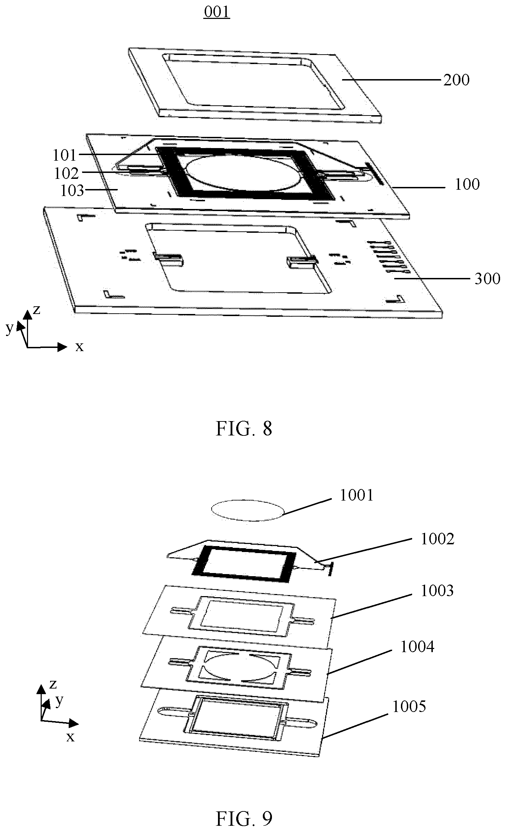

FIG. 7 is a schematic diagram of a structure of a micromirror assembly according to an embodiment of this application. FIG. 8 is a schematic diagram of a torn-down structure of the micromirror assembly in FIG. 7. As shown in FIG. 7 and FIG. 8, the micromirror assembly 001 includes a first position-limiting part 200, a micromirror chip 100, and a second position-limiting part 300 that are stacked.

The micromirror chip 100 includes a fastening frame 103, a movable part 101, and a first cantilever 102.

The movable part 101 is connected to the fastening frame 103 by the first cantilever 102. A micromirror is disposed on the movable part 101, configured to reflect light. A structure of the first cantilever 102 is not limited in this embodiment of this application. The first cantilever 102 includes two or more cantilevers. The cantilever may use a straight beam, a bent beam, a foldable beam, or the like.

The first position-limiting part 200 and the second position-limiting part 300 are separately connected to the fastening frame 103. The first position-limiting part 200 and the second position-limiting part 300 have a hollow area. The hollow areas are opposite to the movable part 101. The hollow areas can ensure that the movable part 101 does not collide with the first position-limiting part 200 and the second position-limiting part 300 when twisting normally, or ensure that normal torsion of the movable part 101 is not affected.

A structure of the micromirror chip 100 is not limited in this embodiment of this application. FIG. 9 is a schematic diagram of a torn-down structure of the micromirror chip in FIG. 7. In some embodiments, as shown in FIG. 9, the micromirror chip 100 includes a micromirror 1001, a coil wire 1002, an insulation layer 1003, a device layer 1004, and a substrate layer 1005 that are stacked.

In some other embodiments, the micromirror chip 100 includes at least a micromirror 1001, a device layer 1004, and a substrate layer 1005 that are stacked. The micromirror 1001 is disposed, for example, on the device layer 1004.

In some embodiments, the micromirror 1001 may be alternatively disposed on a back of the device layer 1004.

In some embodiments, the micromirror 1001 may be alternatively disposed on both a front and a back of the device layer 1004.

A distance between the first position-limiting part and the device layer of the micromirror chip is less than a distance between the first position-limiting part and the substrate layer of the micromirror chip. In a further optional embodiment, the first position-limiting part 200 is opposite the device layer 1004 of the micromirror chip 100.

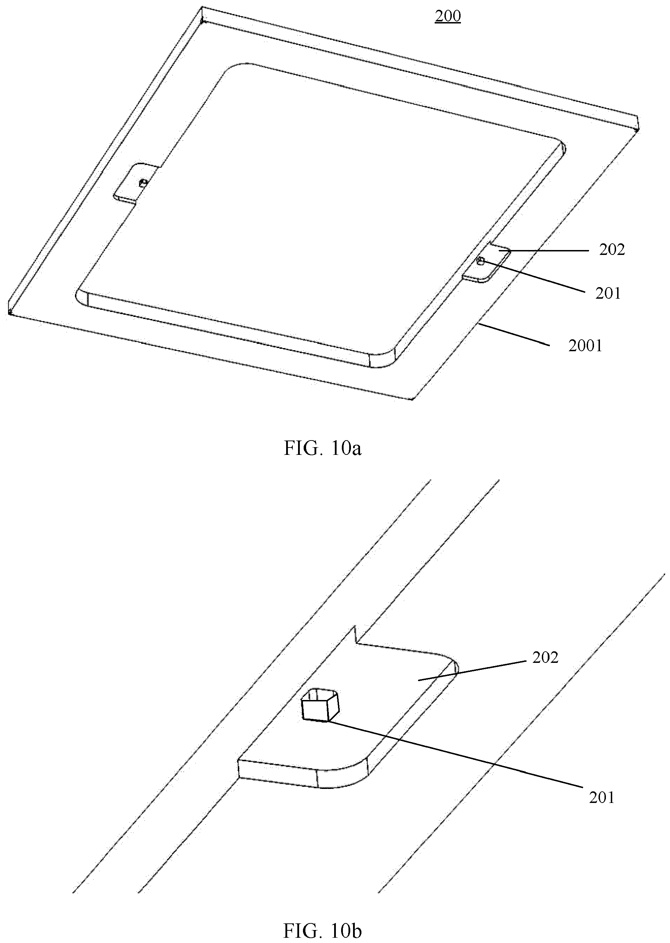

FIG. 10a is a schematic diagram of a structure of the first position-limiting part. FIG. 10b is a partial enlargement view of the first position-limiting part in FIG. 10a.

The device layer of the micromirror chip 100 is thin. To restrict vibration of the micromirror chip 100, as shown in FIG. 10a and FIG. 10b, a first protrusion 201 may be provided on a surface that is of the first position-limiting part 200 and that is opposite the micromirror chip 100.

There is a gap between the first position-limiting part 200 and the micromirror chip 100 and between the second position-limiting part 300 and the micromirror chip 100. When the first cantilever 102 twists in the gaps, the movable part 101 may rotate relative to the fastening frame 103. The first protrusion 201 and the second position-limiting part 300 are configured to absorb shock on a collision with the micromirror chip 100.

Therefore, with the first position-limiting part 200 and the second position-limiting part 300 disposed, displacements of the micromirror in positive and negative directions in a vertical direction can be limited, respectively, so that maximum stress to which the micromirror chip 100 is subjected does not exceed yield strength of a material, and the micromirror chip 100 can pass shock and vibration tests.

A shape of a cross section of the first protrusion 201 is not limited in this embodiment of this application. The shape of the cross section of the first protrusion 201 includes but is not limited to a single regular polygon such as a rectangle, a circle, or a ring, a single irregular shape, a plurality of adjacent regular polygons, or a plurality of adjacent irregular shapes. These all fall within the scope of protection of this application.

In some other embodiments, a second position-limiting structure may be further disposed on the device layer of the micromirror chip 100. The first position-limiting part 200 is configured to absorb shock on a collision with the second position-limiting structure. A projection of the second position-limiting structure on the micromirror chip 100 intersects with a central axis of the first cantilever 102. In some embodiments, the projection of the second position-limiting structure on the micromirror chip 100 is, for example, symmetrical about the central axis of the first cantilever 102.

A structure of the first position-limiting part 200 is not limited in this embodiment of this application. FIG. 10a is a schematic diagram of the structure of the first position-limiting part. FIG. 10b is a partial enlargement view of the first position-limiting part in FIG. 10a. As shown in FIG. 10a and FIG. 10b, the first position-limiting part 200 includes at least the first protrusion 201 and a first frame 2001. The first protrusion 201 may be used as a part that is of the first position-limiting part 200 and that collides with the micromirror chip.

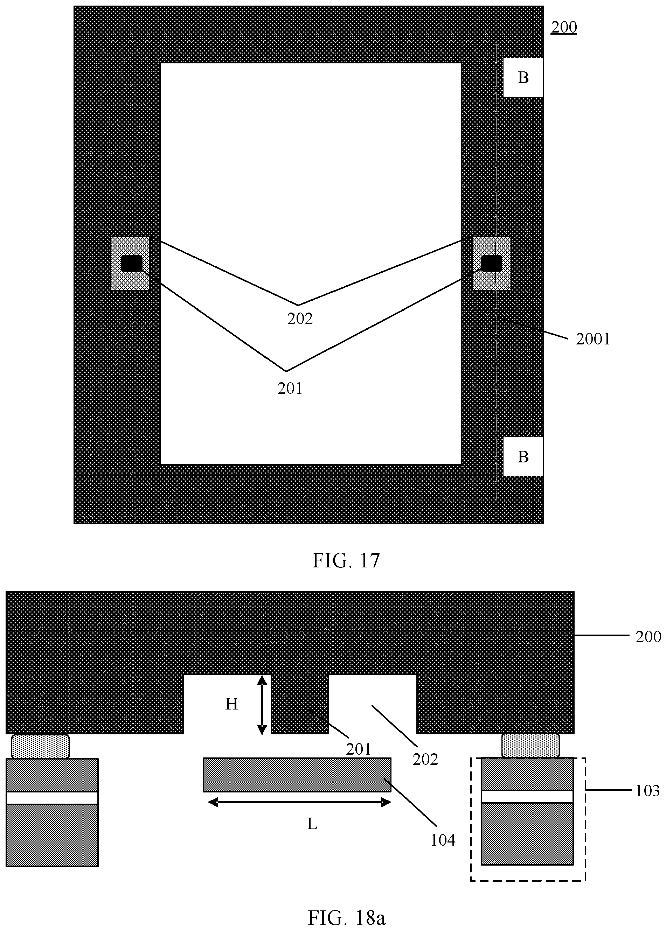

In some embodiments, as shown in FIG. 17, the first position-limiting part 200 includes a first protrusion 201, a first avoidance groove 202, and a first frame 2001. The first protrusion 201 is provided in the first avoidance groove 202. The first avoidance groove 202 is provided on the first frame 2001.

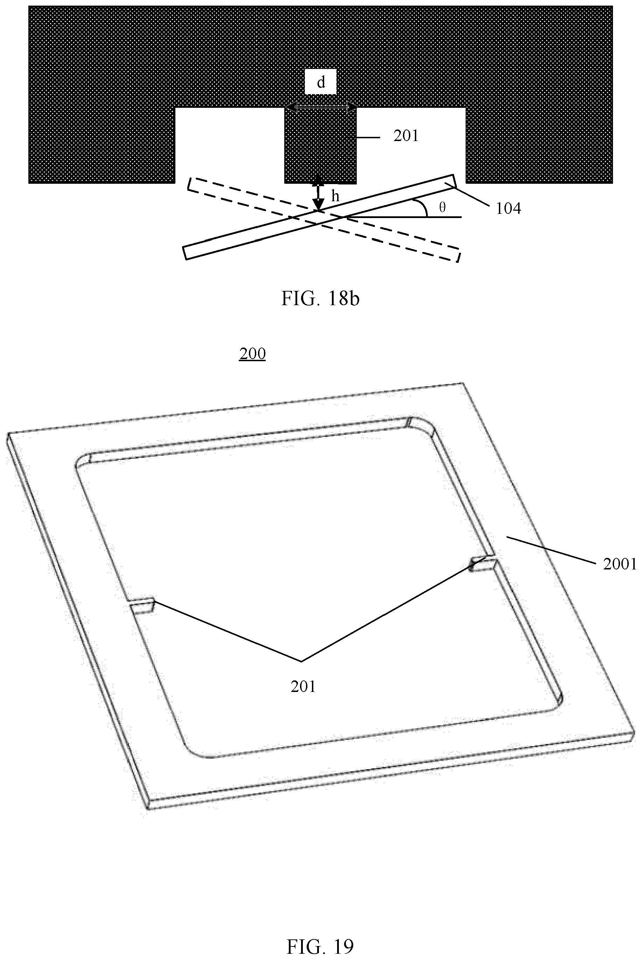

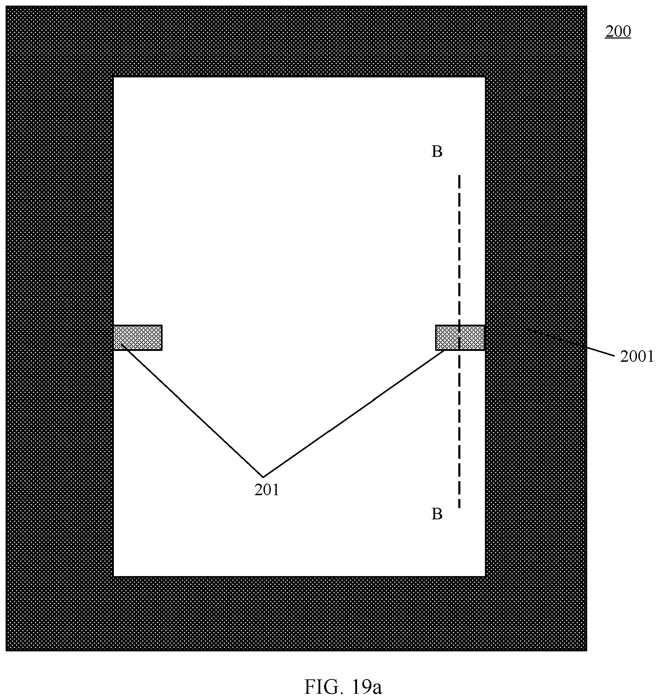

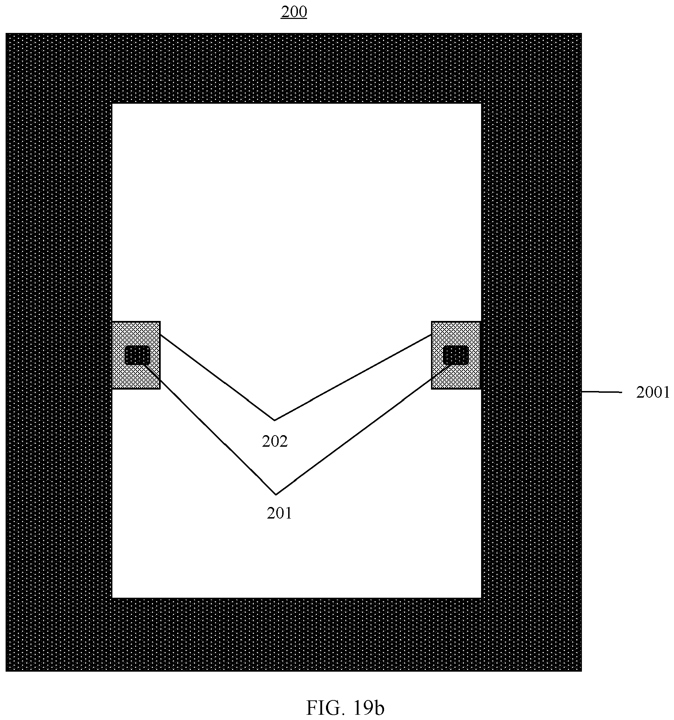

In some other embodiments, as shown in FIG. 19 and FIG. 19a, the first position-limiting part 200 includes a first protrusion 201 and a first frame 2001. The first protrusion 201 is provided in a hollow area enclosed by the first frame 2001. The first protrusion is directly connected to the first frame 2001.

In some other embodiments, as shown in FIG. 19b, the first position-limiting part 200 includes a first protrusion 201, a first avoidance groove 202, and a first frame 2001. The first protrusion 201 is provided in the first avoidance groove 202. The first avoidance groove 202 is provided in a hollow area enclosed by the first frame 2001. The first avoidance groove 202 is connected to the first frame 2001.

A projection of the first protrusion 201 on the micromirror chip 100 intersects with the central axis of the first cantilever 102. It should be noted that the central axis of the first cantilever is an axis of torsion of the first cantilever. A dashed line AA in FIG. 7 is the central axis. Intersecting means that at least a part of the projection of the first protrusion 201 on the micromirror chip 100 falls on the central axis of the first cantilever 102. For a case in which a plurality of adjacent protrusions are provided near a same region, at least a part of a projection of an overall region in which the plurality of protrusions are located falls on the central axis of the first cantilever 102. For other similar cases related to the central axis and projections, refer to this description. Details are not described below again. In some embodiments, the projection of the first protrusion 201 on the micromirror chip 100 is, for example, symmetrical about the central axis of the first cantilever 102. In this way, a point at which the first protrusion and the micromirror chip collide is made close to a middle position of the micromirror, implementing more even distribution of stress. Moreover, when the cantilever of the micromirror rotates, a center undergoes a smallest displacement. With the point of collision close to the center, both limitation of an angle of torsion, and a distance of collision can be minimized, reducing the collision stress.

It should be noted that the projection of the first protrusion 201 on the micromirror chip 100 is not strictly symmetrical about the central axis of the first cantilever 102, with a specific error allowed.

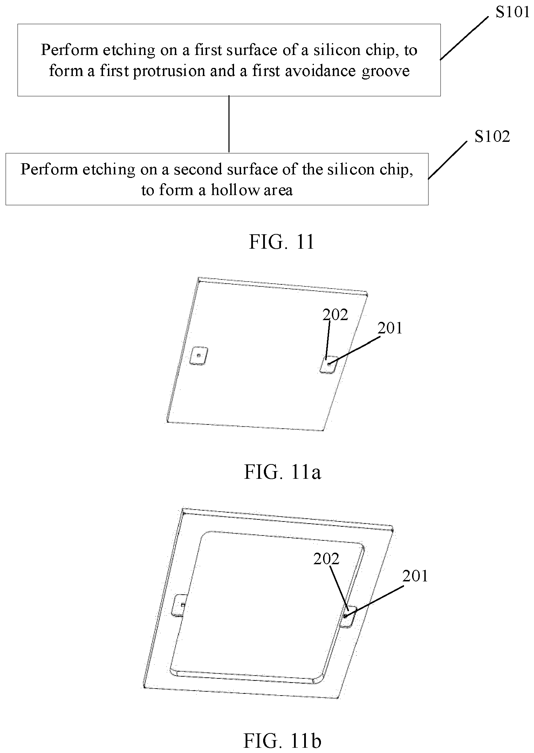

An embodiment of this application further provides a method for producing a first position-limiting part 200. The production method may be used to produce the first position-limiting part 200 shown in FIG. 10a. A material of the first position-limiting part 200 may be a silicon chip. As shown in FIG. 11, the production method includes the following steps.

S101: As shown in FIG. 11a, perform etching on a first surface of a silicon chip, to form a first protrusion 201 and a first avoidance groove 202.

The first protrusion 201 is located in the first avoidance groove 202.

S102: As shown in FIG. 11b, perform etching on a second surface of the silicon chip, to form a hollow area.

The first avoidance groove 201 is located on the silicon chip.

It should be noted that an order of step S101 and step S102 is not limited in this embodiment of this application. In some other embodiments, either of step S101 and step S102 may be performed first.

In addition, methods for producing the first position-limiting parts 200 in FIG. 17, FIG. 19a, and FIG. 19b are not limited in embodiments of this application. For specific processes, refer to the steps shown in FIG. 11. The first protrusion 201, the first avoidance groove 202, and the hollow area in this embodiment are all formed, for example, by performing etching on a silicon chip.

Under shock or vibration, the first cantilever 102 is deformed greatly. The following is found by simulating and analyzing deformation of and stress on the micromirror under shock or vibration that is on different orders of magnitude: When shock or vibration is on a larger order of magnitude, the micromirror is deformed more severely in the vertical direction and subjected to greater stress. In the micromirror chip 100, a position at which the first cantilever 102 and the movable part 101 are connected is subjected to greatest stress. The stress is approximately linear with displacement of the micromirror in the vertical direction.

Based on simulation and experimental results, a position of the micromirror chip 100 may be limited, to prevent the micromirror from being excessively deformed in the direction Z under shock or vibration. In this way, it is avoided that the cantilever fractures under excessive stress.

For a purpose of avoiding damage to a key structure of the micromirror caused by a collision between position-limiting contact points, a structure of the micromirror needs to be improved, and a stop region used for dedicated position limiting is added as a collision part used for amplitude limiting and stopping.

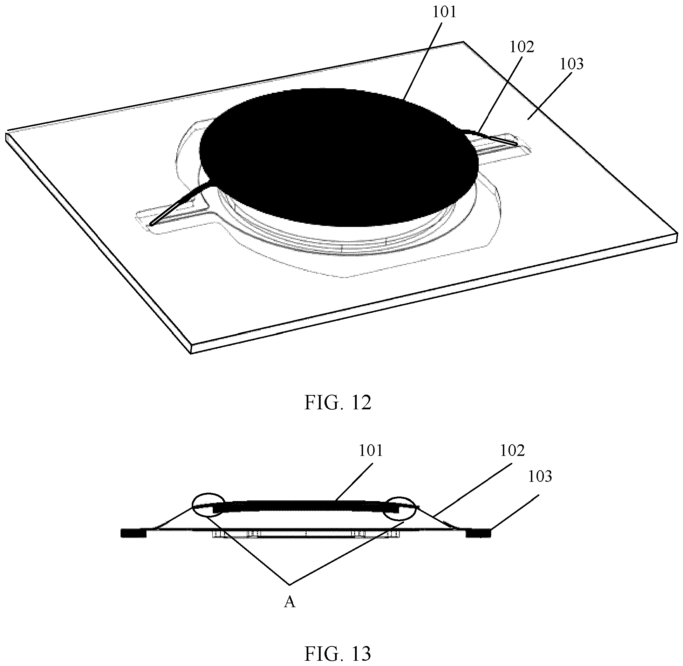

FIG. 12 is a schematic diagram of a three-dimensional structure of a micromirror chip. FIG. 13 is a front view of the micromirror chip in FIG. 12. As shown in FIG. 12 and FIG. 13, it can be found by observing a change in displacement of the micromirror chip in a vertical direction that although a position at which a first cantilever 102 and a fastening frame 103 are connected is subjected to maximum stress, corresponding deformation is minimal, and therefore, it is inappropriate to add a position-limiting part at the position. A position A at which the first cantilever 102 and a movable part 101 are connected, and the movable part 101 are a region with a large change in displacement. The movable part 101 is a core region of the device, and therefore, it is inappropriate to add a stopper part at the movable part 101. In conclusion, a region near the position A at which the first cantilever 102 and the movable part 101 are connected may be used as a position-limiting region, and a stopper part may be added in the region to cooperate with a first position-limiting part 200 and a second position-limiting part 300, preventing the micromirror chip 100 from being damaged due to excessive deformation.

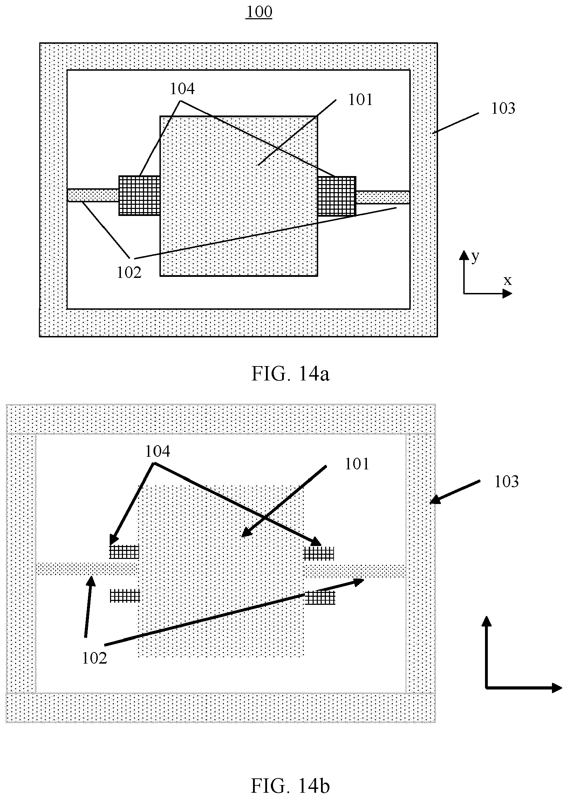

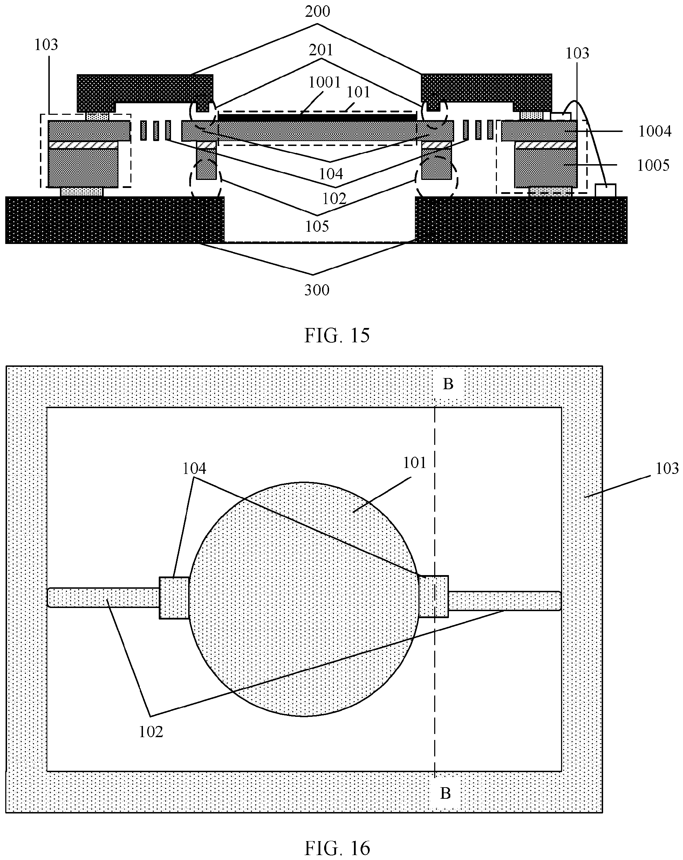

FIG. 14a is a schematic diagram of a structure of a micromirror chip according to an embodiment of this application. FIG. 15 is a view of a section A-A of the micromirror assembly in FIG. 7. As shown in FIG. 14a and FIG. 15, there is a first stopper part 104 between the first cantilever 102 and the movable part 101.

The first protrusion 201 is opposite the first stopper part 104. The first protrusion 201 is configured to absorb shock on a collision with the first stopper part 104.

Therefore, with the first stopper part disposed between the first cantilever and the movable part to cooperate with the first position-limiting part and the second position-limiting part, damage to the micromirror chip due to excessive deformation can be effectively avoided.

As shown in FIG. 14a, a width of the first stopper part 104 is greater than a width of the first cantilever 102. It should be noted that the width of the first stopper part 104 is a size of the first stopper part 104 in a direction of a y-axis. In a special case, the width of the first stopper part 104 may be equal to a width of the movable part 101.

In this way, with the width of the first stopper part increased, a contact surface of collision can be increased, reducing stress generated due to vibration.

It should be noted that the first cantilever 102 is connected to the fastening frame 103 by a chamfer or the like. The first stopper part 104 should be kept at a specific distance from a sensitive structure such as the chamfer of the first cantilever 102, to minimize impact of collision position-limiting on the first cantilever 102. For different actuating manners of the micromirror chip such as magnetoelectrically actuated, piezoelectrically actuated, and thermoelectrically actuated, the first cantilever 102 may have a metallic structure. For a purpose of avoiding damage to the first cantilever 102 or the metallic structure caused by a collision between the first stopper part 104 and the first protrusion 201, the first stopper part 104 is preferably located at a root of the first cantilever 102 and near the movable part 101, and no metallic part such as a coil is disposed at a collision point of the first stopper part 104.

In some embodiments, the first stopper part 104 is disposed on two sides of the position at which the first cantilever 102 and the movable part 101 are connected, as shown in FIG. 14b.

With reference to FIG. 15, there is a protruding position-limiting structure (a first position-limiting structure 105) on a surface that is of the micromirror chip and that is away from the first position-limiting part 200. The second position-limiting part 300 is opposite the first position-limiting structure 105. The second position-limiting part 300 is configured to absorb shock on a collision with the first position-limiting structure 105.

It should be noted that the protruding position-limiting structure means that a height of the position-limiting structure on the surface that is of the micromirror chip and that is away from the first position-limiting part 200 is greater than a height of a region around the position-limiting structure. Specifically, a groove may be provided around a region in which the position-limiting structure is located, so that the position-limiting structure is higher than the region around the position-limiting structure. The protruding position-limiting structure can ensure that a collision part is as far away from a sensitive structure of the chip as possible, reducing impact of collision stress on the chip.

A projection of a part that is of the position-limiting structure and that collides with the second position-limiting part on the micromirror chip intersects with the central axis of the first cantilever. It should be noted that intersecting means that at least a part of the projection of the part that is of the position-limiting structure and that collides with the second position-limiting part 300 on the micromirror chip 100 falls on the central axis of the first cantilever 102.

In some embodiments, the projection of the part that is of the position-limiting structure and that collides with the second position-limiting part on the micromirror chip is symmetrical about the central axis of the first cantilever. In this way, a point at which the position-limiting structure and the second position-limiting part collide is made close to a middle position of the micromirror, implementing more even distribution of stress. Moreover, when the cantilever of the micromirror rotates, a center undergoes a smallest displacement. With the point of collision close to the center, both limitation of an angle of torsion, and a distance of collision can be minimized, reducing the collision stress.

A shape of a cross section of the first position-limiting structure 105 is not limited in this embodiment of this application. The shape of the cross section of the first position-limiting structure 105 includes but is not limited to a regular polygon such as a rectangle or a circle, or an irregular shape. These all fall within the scope of protection of this application.

A structure of the first position-limiting part 200 is not limited in this embodiment of this application.

FIG. 16 is a schematic diagram of a structure of another micromirror chip according to an embodiment of this application. FIG. 17 is a schematic diagram of a structure of a first position-limiting part according to an embodiment of this application. FIG. 18a is a view of a section B-B of the micromirror chip in FIG. 16 and the first position-limiting part in FIG. 17. FIG. 18b is a schematic diagram of an in-use state of the micromirror chip in FIG. 18a. In some embodiments, as shown in FIG. 16, FIG. 17, FIG. 18a, and FIG. 18b, a hollow area of the first position-limiting part 200 is small, and a first stopper part 104 is located in a range of a projection of the first position-limiting part 200 on the micromirror chip 100.

To ensure that normal torsion of the micromirror chip is not affected by a first protrusion 201, there is also a first avoidance groove 202 on the first position-limiting part 200, an opening of the first avoidance groove 202 is opposite the first stopper part 104, and the first protrusion 201 is provided in the first avoidance groove 202.

In some embodiments, a projection of the first protrusion 201 on the micromirror chip 100 is, for example, located at a central position of the first stopper part 104. As shown in FIG. 18a and FIG. 18b, a collision position-limiting distance h between the first protrusion 201 and the first stopper part 104 meets: $h > d/2 \times \tan\theta$, where d is a width of the first protrusion 201, and $\Theta$ is a maximum angle of torsion of the first stopper part 104.

A depth H of the first avoidance groove 202 meets: $H \geq L/2 \times \sin\theta - h$, where L is a width of the first stopper part 104.

In this way, the micromirror chip can twist normally, without being blocked by the first protrusion 201.

FIG. 19a is a schematic diagram of a structure of another first position-limiting part according to an embodiment of this application. FIG. 19b is a schematic diagram of a structure of another first position-limiting part according to an embodiment of this application.

As shown in FIG. 19a and FIG. 19b, a hollow area of the first position-limiting part 200 is large, a first stopper part 104 is located in the hollow area of the first position-limiting part 200, and a first protrusion 201 is located in the hollow area of the first position-limiting part 200.

As shown in FIG. 19a, the first position-limiting part 200 includes the first protrusion 201 and a first frame 2001. The first protrusion 201 is provided in the hollow area enclosed by the first frame 2001. The first protrusion is directly connected to the first frame 2001.

As shown in FIG. 19b, the first position-limiting part 200 includes the first protrusion 201, a first avoidance groove 202, and a first frame 2001. The first protrusion 201 is provided in the first avoidance groove 202. The first avoidance groove 202 is provided in the hollow area enclosed by the first frame 2001. The first avoidance groove 202 is connected to the first frame 2001.

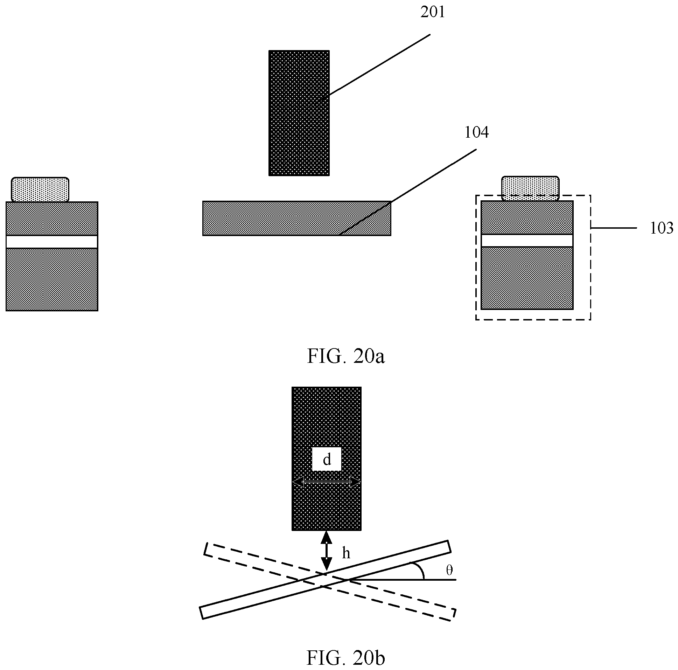

FIG. 20a is a view of a section B-B of the micromirror chip in FIG. 16 and the first position-limiting part in FIG. 19a. FIG. 20b is a schematic diagram of an in-use state of the micromirror chip in FIG. 20a. As shown in FIG. 20a and FIG. 20b, a collision position-limiting distance h between the first protrusion 201 and the first stopper part 104 meets: $h > d/2 \times \tan\theta$, where d is a width of the protrusion.

In this way, the micromirror chip can twist normally, without being blocked by the first protrusion 201.

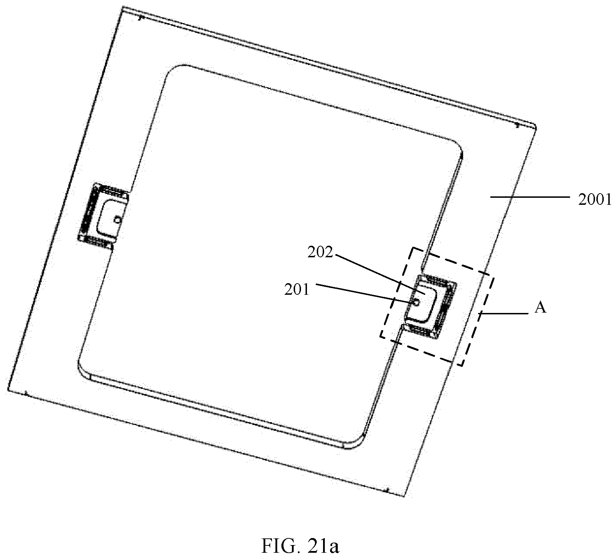

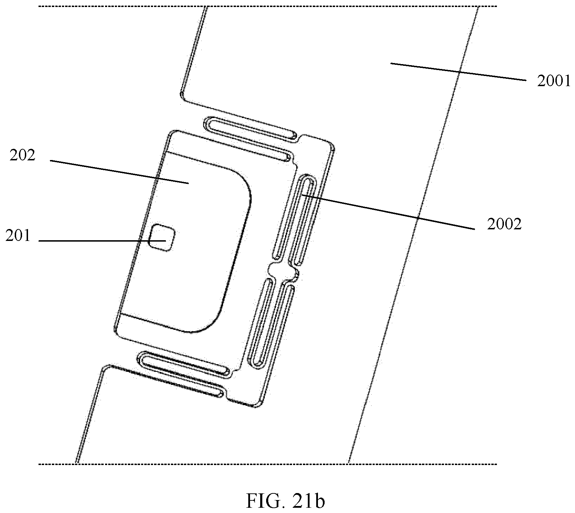

A structure connecting the first protrusion 201 or the first avoidance groove 202 to the first frame 2001 is not limited in this embodiment of this application. To further improve shock resistance of the micromirror chip, FIG. 21a is a schematic diagram of a structure of another first position-limiting part according to an embodiment of this application. FIG. 21b is a partial enlargement view of a region A in FIG. 21a. In some embodiments, as shown in FIG. 21a and FIG. 21b, a first protrusion 201 may be connected to a first frame 2001 by a first movable arm 2002. The first movable arm 2002 may include a single or plurality of cantilevers. A structure of the first movable arm 2002 is not limited in this embodiment of this application.

The first movable arm 2002 may be formed, for example, through etching. During processing, a position at which the first protrusion 201 and the first frame 2001 are connected may be etched, to form the first movable arm 2002 between the first protrusion 201 and the first frame 2001. The first movable arm 2002 may be of a cantilever structure. When the first protrusion 201 is subjected to an external force, the first movable arm 2002 may twist or deform under an action of the external force, so that there may be a relative displacement between the first protrusion 201 and the first frame 2001, alleviating collision stress.

Therefore, when the micromirror chip collides with the first position-limiting part 200, there may be a relative displacement between the first protrusion 201 and the first frame 2001, alleviating collision stress.

In some other embodiments, the first protrusion 201 may be directly connected to the first frame 2001 by the first movable arm 2002 (not shown in the figure).

In this way, with the first movable arm 2002 provided around a collision part of the first position-limiting part, and with the first movable arm 2002 connecting the first protrusion 201 and the first frame 2001, stress generated due to a collision can be reduced, improving shock resistance of the micromirror assembly.

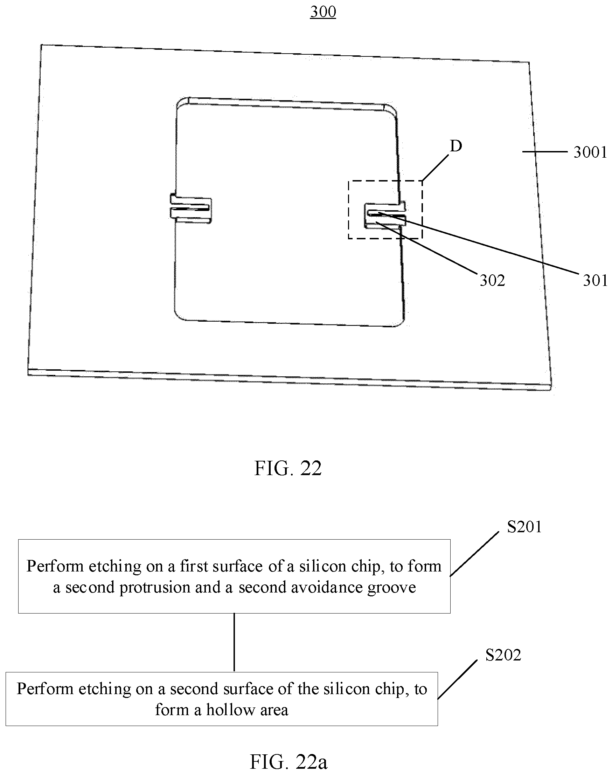

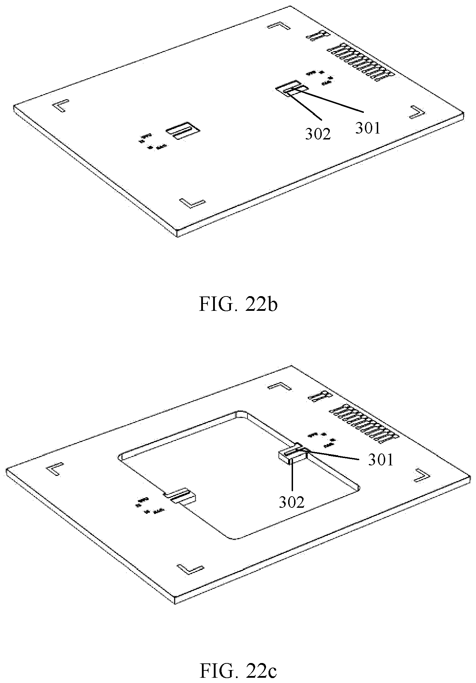

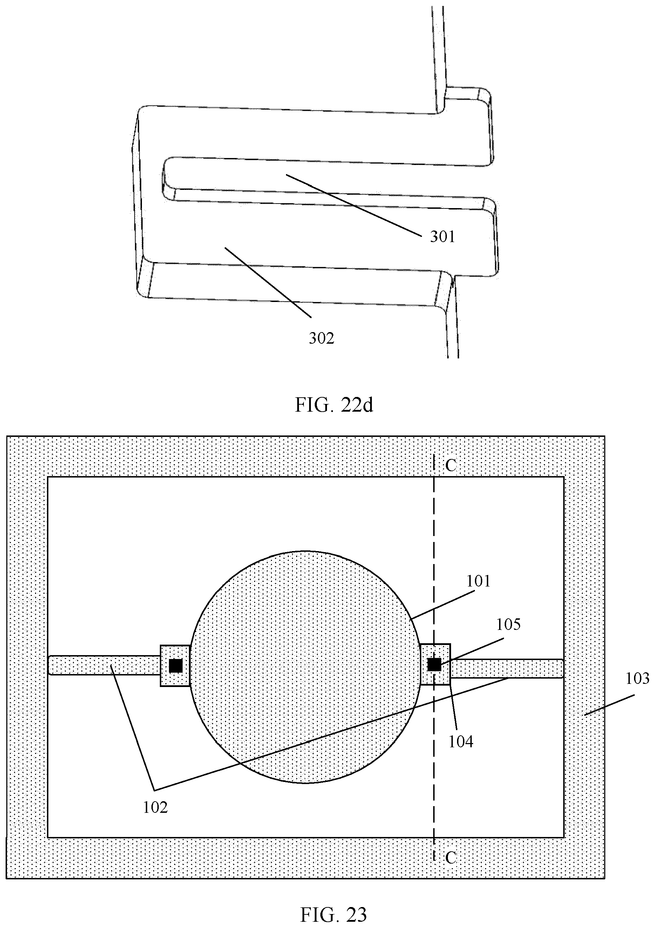

A specific structure of the second position-limiting part 200 is not limited in embodiments of this application. FIG. 22 is a perspective view of a second position-limiting part according to an embodiment of this application. FIG. 22d is a partial enlargement view of a region D in FIG. 22. As shown in FIG. 22 and FIG. 22d, for a structure of the second position-limiting part 300, refer to the structure of the first position-limiting part 200.

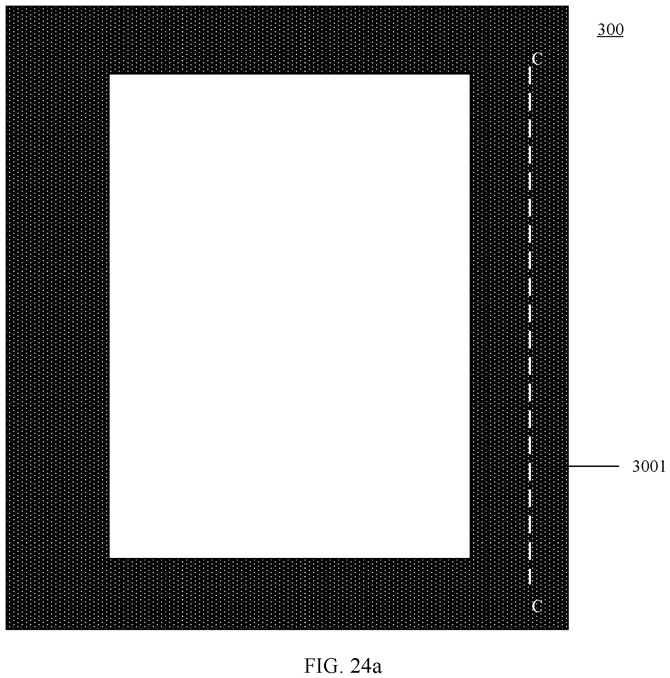

In some embodiments, as shown in FIG. 24a, the second position-limiting part includes a second frame 3001. A partial region of the second frame may be used as a part that is of the second position-limiting part 300 and that collides with a micromirror chip.

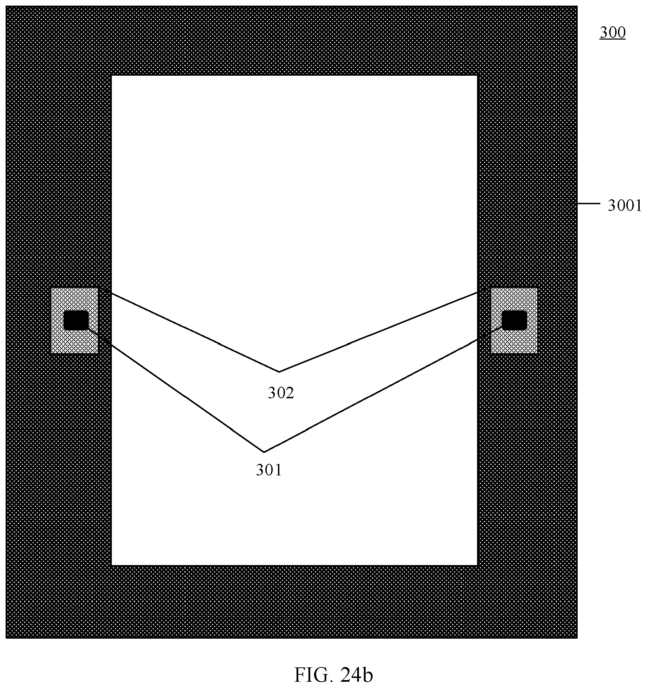

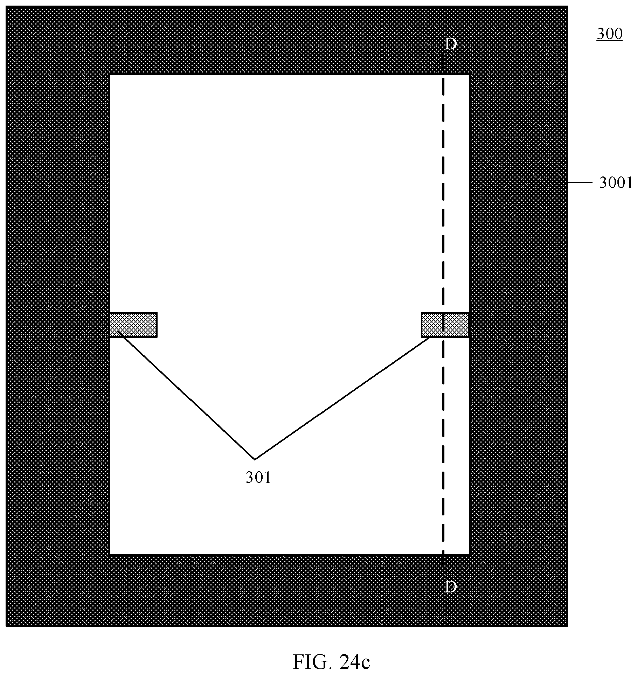

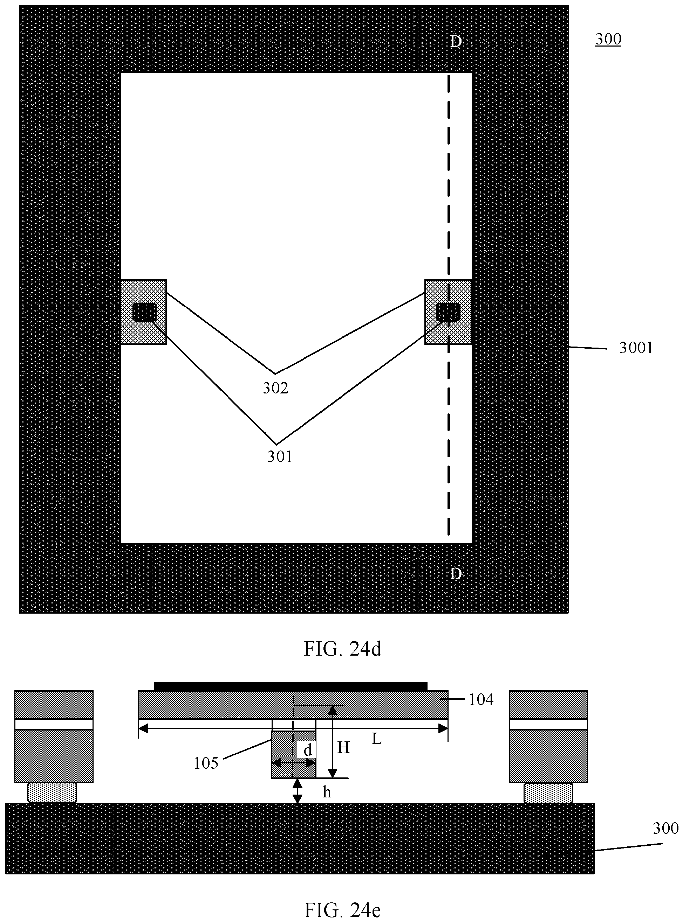

In some embodiments, as shown in FIG. 24b, FIG. 24c, and FIG. 24d, the second position-limiting part includes a second protrusion 301 and a second frame 3001. The second protrusion 301 may be used as a part that is of the second position-limiting part 300 and that collides with a micromirror chip.

For example, a projection of the second protrusion 301 on the micromirror chip 100 intersects with a central axis of a first cantilever 102. In some embodiments, the projection of the second protrusion 301 on the micromirror chip 100 is, for example, symmetrical about the central axis of the first cantilever 102. In this way, a point at which the second protrusion and the micromirror chip collide is made close to a middle position of the micromirror chip, implementing more even distribution of stress. Moreover, when the cantilever of a micromirror rotates, a center undergoes a smallest displacement. With the point of collision close to the center, both limitation of an angle of torsion, and a distance of collision can be minimized, reducing the collision stress.

A shape of a cross section of the second protrusion 301 is not limited in this embodiment of this application. The shape of the cross section of the second protrusion 301 includes but is not limited to a single regular polygon such as a rectangle, a circle, or a ring, a single irregular shape, a plurality of adjacent regular polygons, or a plurality of adjacent irregular shapes. These all fall within the scope of protection of this application.

It should be noted that the projection of the second protrusion 301 on the micromirror chip 100 is not strictly symmetrical about the central axis of the first cantilever 102, with a specific error allowed.

In some other embodiments, as shown in FIG. 24b, the second protrusion 301 is provided in a second avoidance groove 302, and the second avoidance groove 302 is located on the second frame 3001.

In some other embodiments, as shown in FIG. 24c, the second protrusion 301 is located in a hollow area enclosed by the second frame 3002, and the second protrusion is connected to the second frame 3001.

In some other embodiments, as shown in FIG. 24d, the second protrusion 301 is provided in a second avoidance groove 302, the second avoidance groove 302 is located in a hollow area enclosed by the second frame 3001, and the second avoidance groove 302 is connected to the second frame 3001.

An embodiment of this application further provides a method for producing a second position-limiting part 300. The production method may be used to produce the second position-limiting part 300 shown in FIG. 22. A material of the second position-limiting part 300 may be a silicon chip. As shown in FIG. 22a, the production method includes the following steps.

S201: As shown in FIG. 22b, perform etching on a first surface of a silicon chip, to form a second protrusion 301 and a second avoidance groove 302.

The second protrusion 301 is located in the second avoidance groove 302.

S202: As shown in FIG. 22c, perform etching on a second surface of the silicon chip, to form a hollow area.

The second avoidance groove 302 is located in the hollow area.

It should be noted that an order of step S201 and step S102 is not limited in this embodiment of this application. In some other embodiments, either of step S201 and step S202 may be performed first.

In addition, methods for producing the second position-limiting parts 300 shown in FIG. 24a, FIG. 24b, FIG. 24c, and FIG. 24d are not limited in embodiments of this application. For specific processes, refer to the steps shown in FIG. 22a. The second protrusion 301, the second avoidance groove 302, and the hollow area in this embodiment are all formed, for example, by using an etching process.

FIG. 23 is a schematic diagram of a structure of another micromirror chip according to an embodiment of this application. To further improve shock resistance, as shown in FIG. 23, there is a first position-limiting structure 105 on a surface that is of the first cantilever 102 and that is away from the first position-limiting part 200. The first position-limiting structure 105 is located at a position at which the first cantilever 102 and the movable part 101 are connected.

In some specific embodiments, as shown in FIG. 15 and FIG. 23, the first position-limiting structure 105 is located on a surface that is of the first stopper part 104 and that is away from the first position-limiting part 200.

The second position-limiting part 300 is opposite the first position-limiting structure 105. The second position-limiting part 300 is configured to absorb shock on a collision with the first position-limiting structure 105.

A process of forming the first position-limiting structure 105 is not limited in this embodiment of this application. In some embodiments, the first position-limiting structure 105 may be a protrusion etched into a substrate layer of the first cantilever 102.

FIG. 24a is a schematic diagram of a structure of a second position-limiting part according to an embodiment of this application. In some embodiments, as shown in FIG. 24a, the second position-limiting part 300 is of a flat plate structure.

As shown in FIG. 24e, the first position-limiting structure 105 is a protrusion, and a collision position-limiting distance h between the second position-limiting part 300 and the first position-limiting structure 105, and a width d of the first position-limiting structure 105 meet:

$$h > \sqrt{H^2 + d^2/4} - H$$

H is a distance between a bottom of the first position-limiting structure 105 and a center of an axis of rotation of a micromirror. L is a width of the first stopper part 104.

In some other embodiments, the second position-limiting part may be of a structure similar to the first position-limiting part. As shown in FIG. 24b, there are a second protrusion 301 and a second avoidance groove 302 on the second position-limiting part 300, an opening of the second avoidance groove 302 is opposite the first position-limiting structure 105, and the second protrusion 301 is provided in the second avoidance groove 302.

In some other embodiments, as shown in FIG. 24c, there is a second protrusion 301 on the second position-limiting part 300, the second protrusion 301 is opposite the first position-limiting structure 105, and the second protrusion 301 is located in the hollow area of the second position-limiting part 300.

In some other embodiments, as shown in FIG. 24d, a second protrusion 301 is provided in a second avoidance groove 302, the second avoidance groove 302 is located in a hollow area enclosed by a second frame 3001, and the second avoidance groove 302 is connected to the second frame 3001.

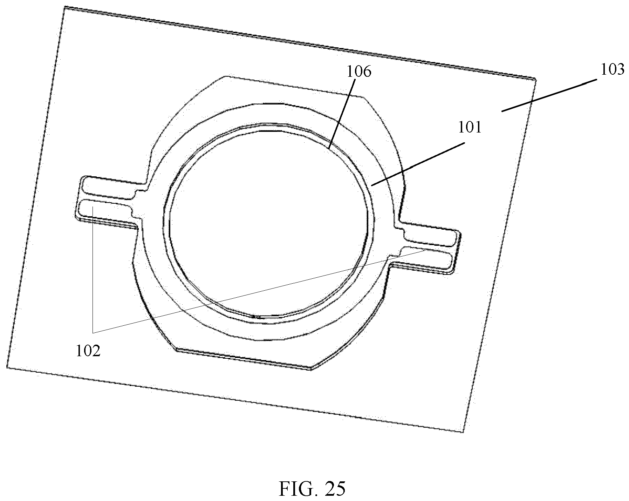

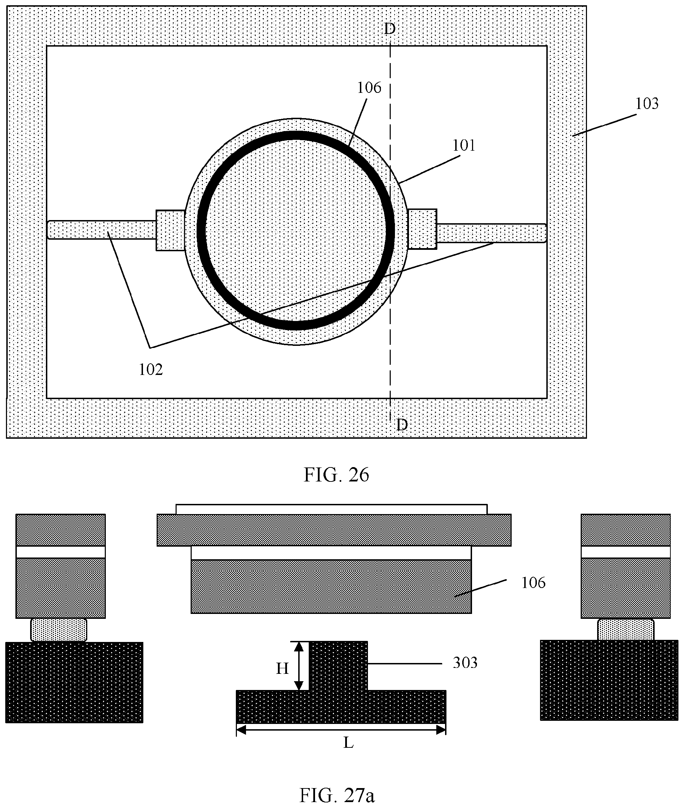

FIG. 25 is a perspective view of another micromirror chip according to an embodiment of this application. FIG. 26 is a schematic diagram of a structure of the micromirror chip in FIG. 25. To further improve shock resistance of the micromirror assembly, as shown in FIG. 25 and FIG. 26, there is a first position-limiting structure 106 on a surface that is of the movable part 101 and that is away from the first position-limiting part 200.

The second position-limiting part 300 is opposite the first position-limiting structure 106. The second position-limiting part 300 is configured to absorb shock on a collision with the first position-limiting structure 106.

A shape of a cross section of the first position-limiting structure 106 is not limited in this embodiment of this application. The shape of the cross section of the first position-limiting structure 106 includes but is not limited to a regular polygon such as a rectangle, a circle, or a ring, or an irregular shape. These all fall within the scope of protection of this application.

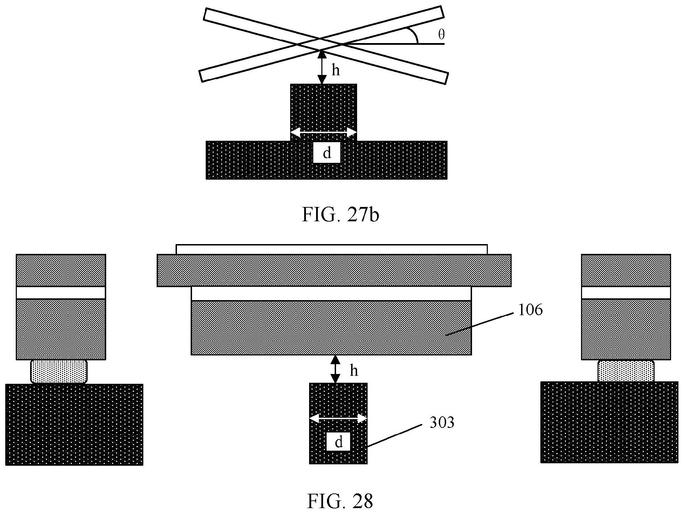

FIG. 27a is a view of a section D-D of the micromirror chip in FIG. 26 and the second position-limiting part in FIG. 24d. FIG. 27b is a schematic diagram of an in-use state of the micromirror chip in FIG. 27a. As shown in FIG. 27a and FIG. 27b, an etching depth H of the second avoidance groove 302 is greater than or equal to $L/2 \times \sin\theta - h$, where L is a width of the avoidance groove 302. A collision position-limiting distance h between the second protrusion 301 and the first position-limiting structure 106 meets a relationship: $h > d/2 \times \tan\theta$, to ensure that normal rotation of the micromirror is not affected.

FIG. 28 is a view of a section D-D of the micromirror chip in FIG. 26 and the second position-limiting part in FIG. 24c.

As shown in FIG. 24c, there is the second protrusion 301 on the second position-limiting part 300, the second protrusion 301 is opposite the first position-limiting structure 106, and the second protrusion 301 is located in the hollow area of the second position-limiting part 300.

As shown in FIG. 28, a collision position-limiting distance h between the second protrusion 301 and the first position-limiting structure 106 and a width d of the second protrusion 301 meet a relationship: $h > d/2\tan\theta$, to ensure that normal rotation of the micromirror is not affected.

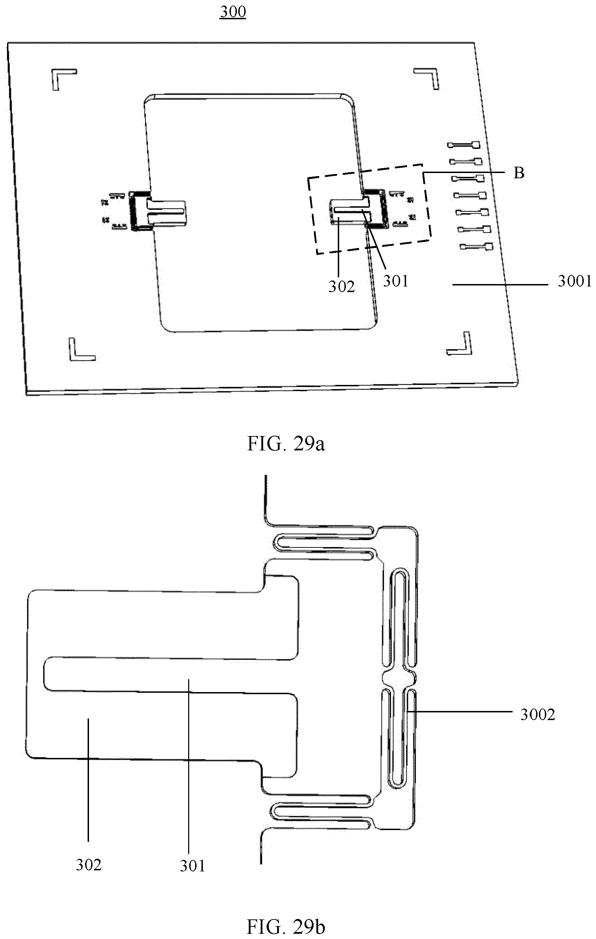

A structure connecting the second protrusion 301 or the second avoidance groove 302 to the second frame 3001 is not limited in this embodiment of this application. For a purpose of further improving shock resistance of the micromirror chip, in some embodiments, as shown in FIG. 29a and FIG. 29b, a first avoidance groove 202 may be connected to a second frame 3001 by a second movable arm 3002. The second movable arm 3002 may include a single or plurality of cantilevers. A structure of the second movable arm 3002 is not limited in this embodiment of this application.

The second movable arm 3002 may be formed, for example, through etching. During processing, a position at which the second protrusion 301 and the second frame 3001 are connected may be etched, to form the second movable arm 3002 between the second protrusion 301 and the second frame 3001. The second movable arm 3002 may be of a cantilever structure. When the second protrusion 301 is subjected to an external force, the second movable arm 3002 may twist or deform under an action of the external force, so that there may be a relative displacement between the second protrusion 301 and the second frame 3001, alleviating collision stress.

Therefore, when the micromirror chip collides with the second position-limiting part 300, there may be a relative displacement between the second protrusion 301 and the second frame 3001, alleviating collision stress.

In some other embodiments, the second protrusion 301 may be directly connected to the second frame by the second movable arm (not shown in the figure).

In this way, with the second movable arm 3002 provided around a collision part of the second position-limiting part, and with the second movable arm 3002 connecting the second protrusion 301 and the second frame 3001, stress generated due to a collision can be reduced, improving shock resistance of the micromirror assembly.

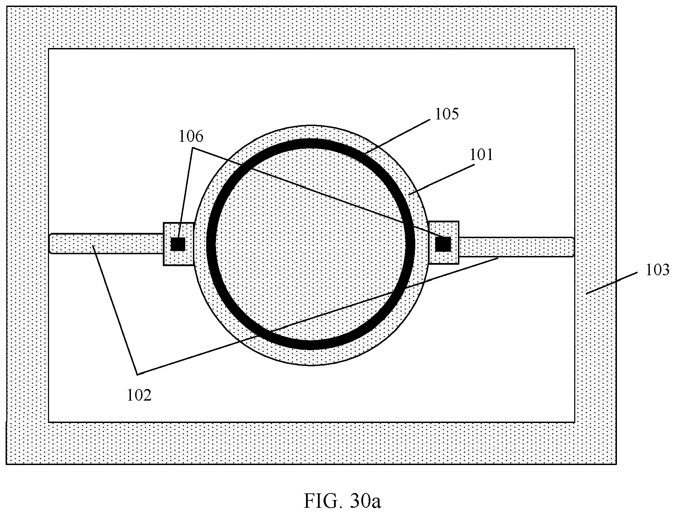

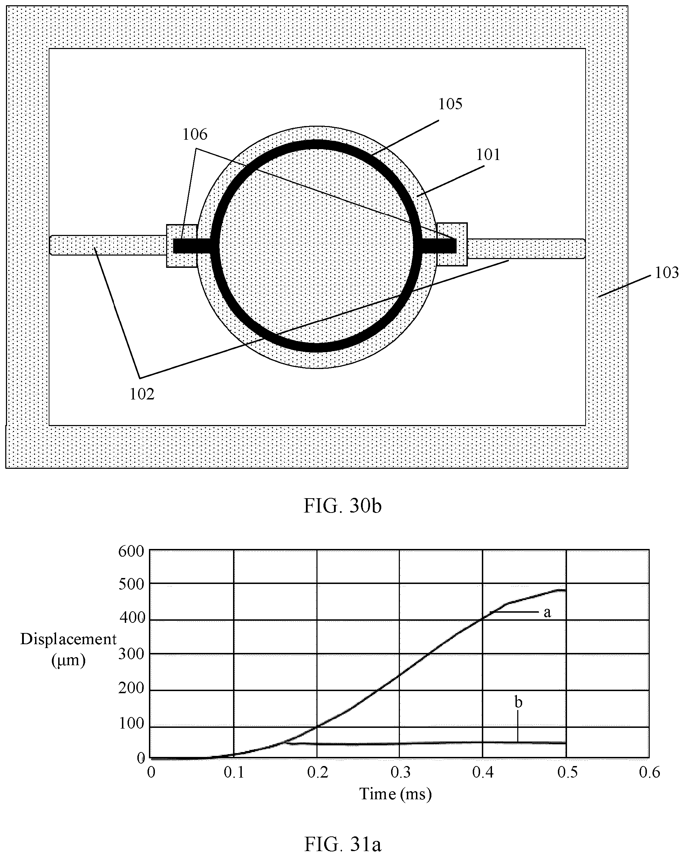

FIG. 30a is a schematic diagram of a structure of another micromirror chip according to an embodiment of this application. FIG. 30b is a schematic diagram of a structure of another micromirror chip according to an embodiment of this application.

As shown in FIG. 30a and FIG. 30b, to further improve shock resistance of the micromirror assembly 001, there is a first position-limiting structure 105 on a surface that is of the first cantilever 102 and that is away from the first position-limiting part 200, and there is a first position-limiting structure 106 on a surface that is of the movable part 101 and that is away from the first position-limiting part 200. The first position-limiting structures 105 and 106 are located at a position at which the first cantilever 102 and the movable part 101 are connected.

As shown in FIG. 30a, the first position-limiting structures 105 and 106 are disconnected.

As shown in FIG. 30b, the first position-limiting structures 105 and 106 are connected.

Based on the foregoing shockproof position-limiting structures, a vibration test is performed on a micromirror assembly with a first position-limiting part and a second position-limiting part and a micromirror assembly without a first position-limiting part and a second position-limiting part in an embodiment of this application.

FIG. 31a is a diagram of a comparison of simulation results of displacements of cantilevers in a case in which a first position-limiting part and a second position-limiting part are absent and a case in which a first position-limiting part and a second position-limiting part are present.

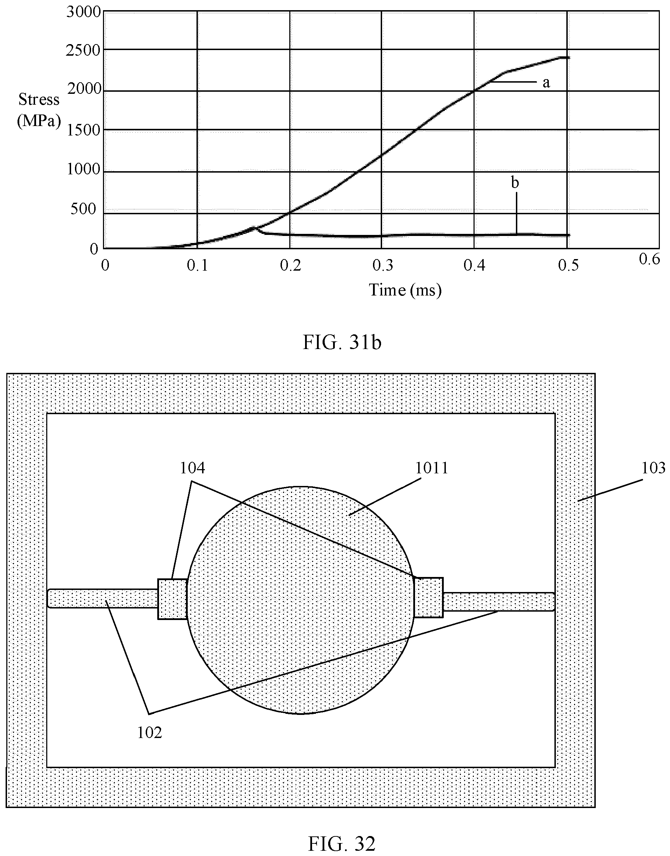

FIG. 31b is a diagram of a comparison of simulation results of maximum stress of cantilevers in a case in which a first position-limiting part and a second position-limiting part are absent and a case in which a first position-limiting part and a second position-limiting part are present.

A line a in FIG. 31a is a simulation curve of the displacement of the cantilever in the case in which the first position-limiting part 200 and the second position-limiting part 300 are not disposed. A line a in FIG. 3 1b is a simulation curve of the maximum stress of the cantilever in the case in which the first position-limiting part 200 and the second position-limiting part 300 are not disposed.

As indicated by the line a in FIG. 31a and the line a in FIG. 31b, when the position-limiting parts are absent, the displacement of a micromirror continuously increases when the micromirror is subjected to shock at 1500 g acceleration and with half-wave duration of 0.5 ms (AEC-Q specification for shock). As a result, the maximum stress far exceeds yield stress (700 MPa to 1000 MPa) of a material, and finally the cantilever fractures and is damaged.

A line b in FIG. 31a is a simulation curve of the displacement of the cantilever in the case in which the first position-limiting part 200 and the second position-limiting part 300 are disposed. A line b in FIG. 3 1b is a simulation curve of the maximum stress of the cantilever in the case in which the first position-limiting part 200 and the second position-limiting part 300 are disposed.

As indicated by the line b in FIG. 31a and the line b in FIG. 3 1b, when the first position-limiting part 200 and the second position-limiting part 300 are disposed, a maximum displacement of the cantilever is limited to 100 μm when a micromirror is subjected to shock at 1500 g acceleration and with half-wave duration of 0.5 ms (AEC-Q specification for shock). In this case, the maximum stress is small and is less than yield stress of a material, avoiding damage to the micromirror.

In this way, with the first position-limiting part 200 and the second position-limiting part 300 integrated above and below the micromirror chip 100, and by controlling a distance between the micromirror chip 100 and a gasket to implement stopping and position limiting, displacements of the micromirror chip 100 in upward and downward vibration directions are limited, and it is avoided that the cantilever of the micromirror fractures under excessive stress when being subjected to shock or vibration, improving vibration resistance of the chip.

Therefore, with the first position-limiting part 200 and the second position-limiting part 300 disposed, damage to a key structure such as the cantilever or a mirror surface caused by vibration of the micromirror chip 100 can be effectively prevented.

A structure of the micromirror chip 100 is not limited in this embodiment of this application. The micromirror chip 100 may be a one-dimensional micromirror or two-dimensional micromirror.

FIG. 32 is a schematic diagram of a structure of a one-dimensional micromirror according to an embodiment of this application.

In some embodiments, as shown in FIG. 32, the micromirror chip 100 is a one-dimensional micromirror. The movable part includes a micromirror 1011. The micromirror 1011 is connected to the fastening frame 103 by the first cantilever 102. There is a first stopper part 104 between the first cantilever 102 and the micromirror 1011.

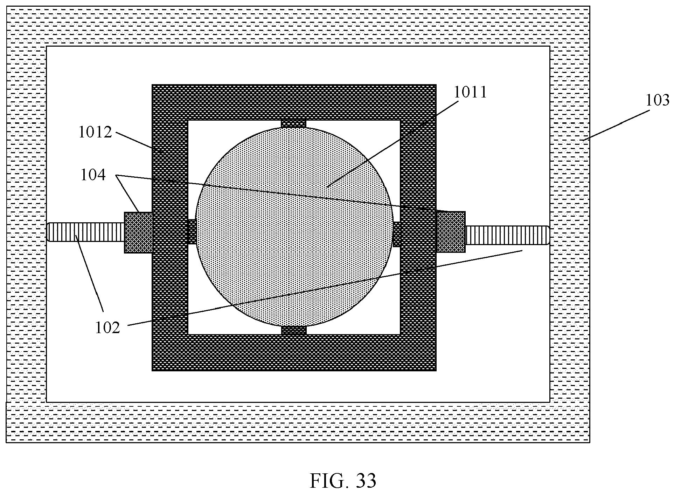

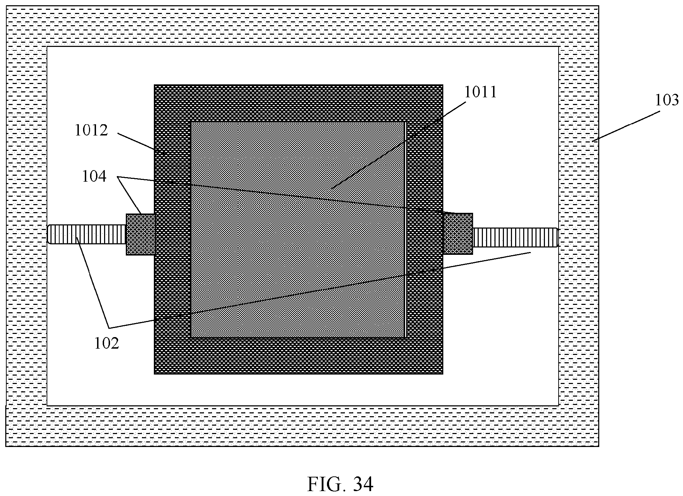

FIG. 33 is a schematic diagram of a structure of another one-dimensional micromirror according to an embodiment of this application. FIG. 34 is a schematic diagram of a structure of another one-dimensional micromirror according to an embodiment of this application. In some other embodiments, the micromirror chip 100 is a one-dimensional micromirror. As shown in FIG. 33 and FIG. 34, the movable part includes a first movable frame 1012 and a micromirror 1011. The first movable frame 1012 is located between the micromirror 1011 and the fastening frame 103. The first movable frame 1012 is fastened to the micromirror 1011, and rotatably connected to the fastening frame 103 by the first cantilever 102. There is a first stopper part 104 between the first cantilever 102 and the first movable frame 1012.

The micromirror 1011 in FIG. 33 is round, and the micromirror 1011 in FIG. 34 is square.

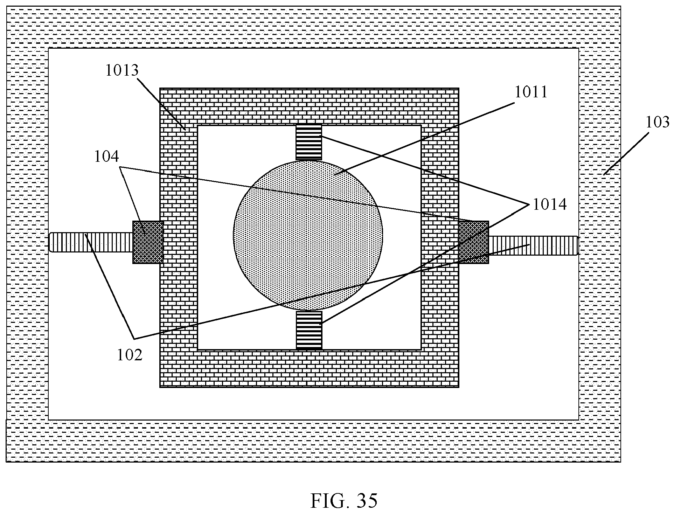

FIG. 35 is a schematic diagram of a structure of a two-dimensional micromirror according to an embodiment of this application.

In some embodiments, as shown in FIG. 35, when the micromirror chip 100 is a two-dimensional micromirror, the movable part includes a second movable frame 1013, a micromirror 1011, and a second cantilever 1014. The second movable frame 1013 is disposed around the micromirror 1011, and the fastening frame 103 is disposed around the second movable frame 1013. The second movable frame 1013 is connected to the micromirror 1011 by the second cantilever 1014 and connected to the fastening frame 103 by the first cantilever 102. There is a first stopper part 104 between the first cantilever 102 and the second movable frame 1013.

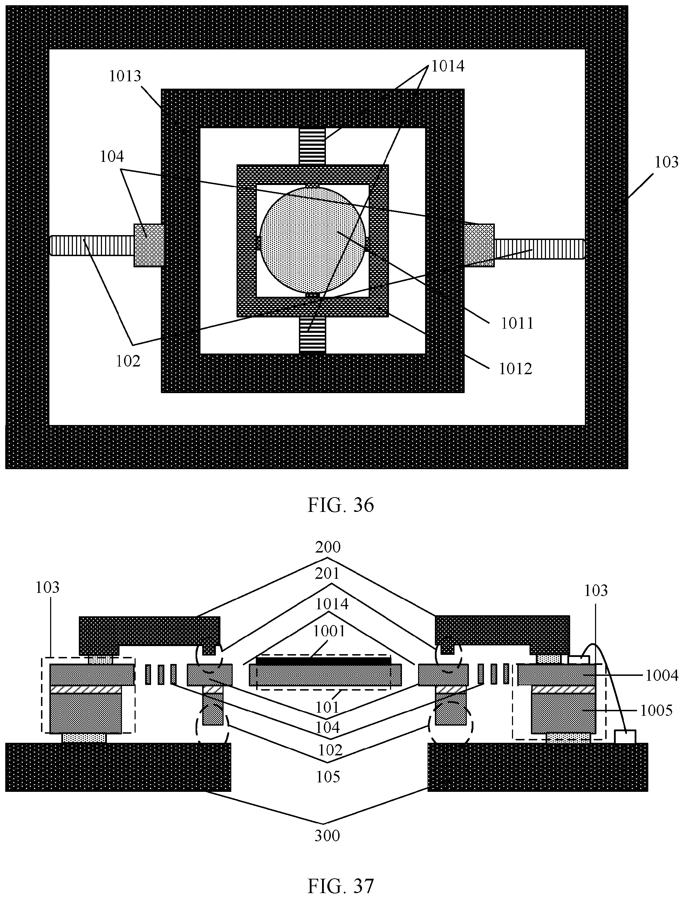

FIG. 36 is a schematic diagram of a structure of another two-dimensional micromirror according to an embodiment of this application.

In some other embodiments, as shown in FIG. 36, the movable part includes a second movable frame 1013, a micromirror 1011, a first movable frame 1012, and a second cantilever 1014. The first movable frame 1012 is disposed between the second movable frame 1013 and the micromirror 1011. The first movable frame 1012 is fastened to the micromirror 1011, and rotatably connected to the second movable frame 1013 by the second cantilever 1014. The second movable frame 1013 is connected to the fastening frame 103 by the first cantilever 102. There is a first stopper part 104 between the first cantilever 102 and the second movable frame 1013.

FIG. 37 is a schematic diagram of a structure of another micromirror assembly. A micromirror chip in FIG. 37 uses a two-dimensional micromirror. When the micromirror assembly in FIG. 37 is compared with the micromirror assembly in FIG. 15, a second cantilever 1014 is added.

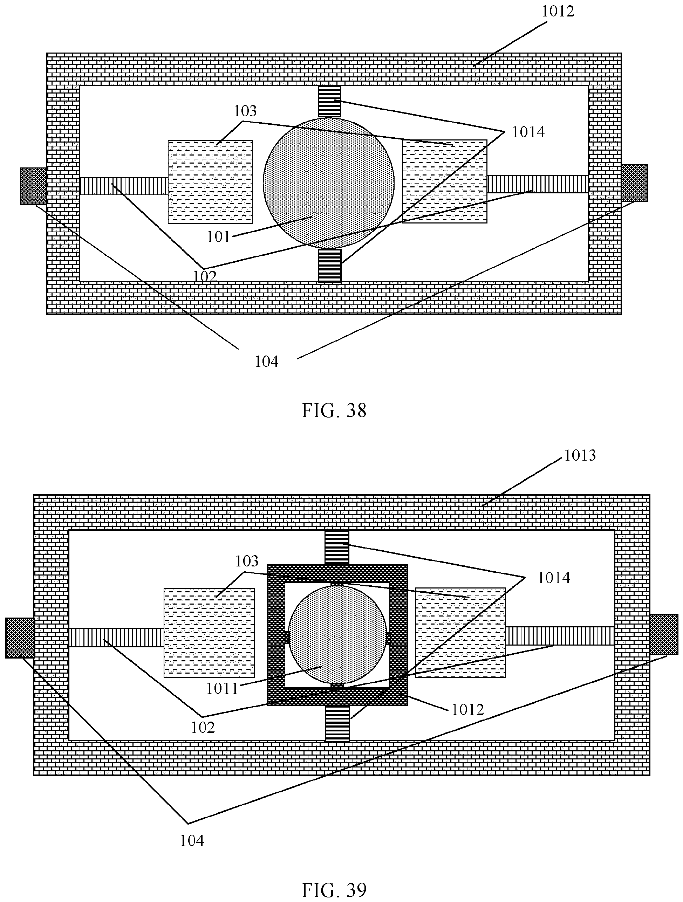

FIG. 38 is a schematic diagram of a structure of another two-dimensional micromirror according to an embodiment of this application. FIG. 39 is a schematic diagram of a structure of another two-dimensional micromirror according to an embodiment of this application.

In some other embodiments, a two-dimensional micromirror may alternatively be of structures shown in FIG. 38 and FIG. 39. A difference between the structures shown in FIG. 38 and FIG. 39 and the structures of the micromirror assemblies shown in FIG. 35 and FIG. 36 lies in that the fastening frame 103 of the micromirror 1011 is located within the first movable frame 1012.

As shown in FIG. 38, the second movable frame 1013 is disposed around the fastening frame 103, the fastening frame 103 is connected to the fastening frame 103 by the first cantilever 102, and the micromirror 1011 is connected to the first movable frame 1012 by the second cantilever 1014.

When FIG. 39 is compared with FIG. 38, a first movable frame 1012 is disposed between the second movable frame 1013 and the micromirror 1011. The first movable frame 1012 is fastened to the micromirror 1011, and rotatably connected to the second movable frame 1013 by the second cantilever 1014.

For the micromirrors 1011 shown in FIG. 38 and FIG. 39, a first stopper part 104 may be disposed on outer sides of the second movable frame 1013.

A manner in which the first position-limiting part 200 and the micromirror chip 100 are connected is not limited in this embodiment of this application.

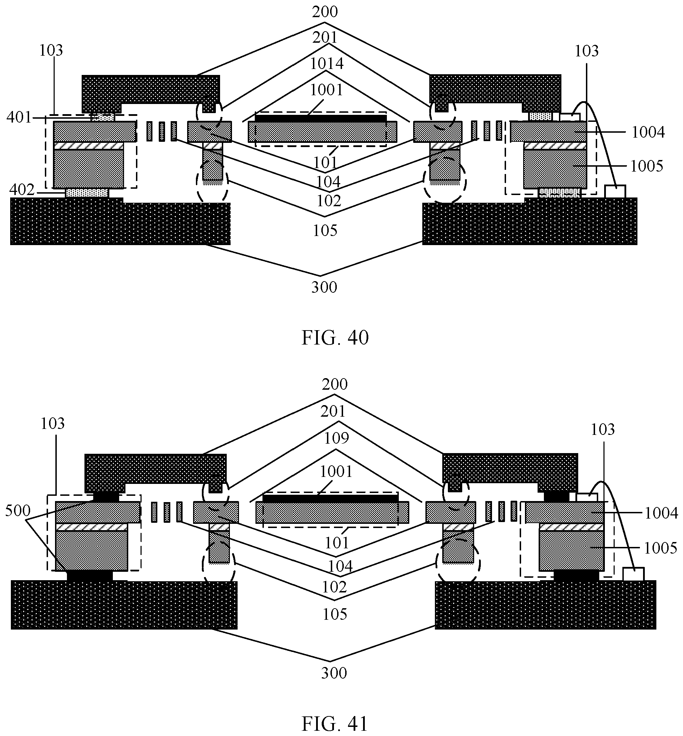

FIG. 40 is a schematic diagram of a structure of another micromirror assembly according to an embodiment of this application.

In some embodiments, as shown in FIG. 40, the first position-limiting part 200 is connected to the fastening frame 103 by a first adhesive layer 401.

In this way, the first position-limiting part is integrated onto the micromirror chip 100 through adhesive dispensing, limiting a displacement of the micromirror 1011 in the direction Z and improving shock resistance of the chip.

In some examples of this embodiment, a height of a gap between the first position-limiting part 200 and the micromirror chip 100 is equal to a thickness of the first adhesive layer 401. It should be noted that "equal" in the foregoing embodiment is not strictly "equal", with an error allowed.

The gap between the first position-limiting part 200 and the micromirror chip 100 may be set based on an actual size of the micromirror, a requirement for shock resistance, acceptable maximum stress, and the like, and is usually above 10 $\mu$m to 20 $\mu$m and below 200 $\mu$m.

Use of adhesive dispensing can also implement heights of below 10 $\mu$m or above 200 $\mu$m. A wide range of gap heights can be implemented through adhesive dispensing. Therefore, micromirror assemblies of different heights can be produced.

In some embodiments, the first adhesive layer 401 is filled with hard particles. Sizes of the hard particles in the first adhesive layer 401 determine a thickness of the first adhesive layer 401, implementing precise control of the thickness of the adhesive layer.

The thickness of the first adhesive layer 401 determines the height of the gap between the first position-limiting part 200 and the micromirror chip 100. Therefore, the height of the gap between the first position-limiting part 200 and the micromirror chip 100 can be controlled by controlling the thickness of the first adhesive layer.

In some other embodiments, the first position-limiting part 200 is bonded to the fastening frame 103. FIG. 41 is a schematic diagram of a structure of another micromirror assembly according to an embodiment of this application. As shown in FIG. 41, a gold-silicon bond 500 may be used in a process of bonding the first position-limiting part 200 to the fastening frame 103.

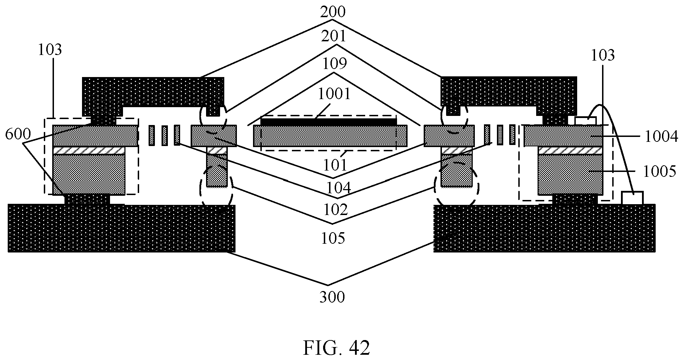

Alternatively, FIG. 42 is a schematic diagram of a structure of another micromirror assembly according to an embodiment of this application. As shown in FIG. 42, a silicon-silicon bond 600 may be used in a process of bonding the first position-limiting part 200 to the fastening frame 103.

A manner in which the second position-limiting part 300 and the micromirror chip 100 are connected is not limited in this embodiment of this application.

In some embodiments, as shown in FIG. 40, the second position-limiting part 300 is connected to the fastening frame 103 by a second adhesive layer 402.

In this way, the second position-limiting part is integrated onto the micromirror chip 100 through adhesive dispensing, limiting a displacement of the micromirror 1011 in the direction Z and improving shock resistance of the chip.

A thickness of the second adhesive layer 402 determines a height of a gap between the second position-limiting part 300 and the micromirror chip 100. Therefore, the height of the gap between the second position-limiting part 300 and the micromirror chip 100 can be controlled by controlling the thickness of the second adhesive layer 402.

The height of the gap between the second position-limiting part 300 and the micromirror chip 100 is equal to the thickness of the second adhesive layer 402. It should be noted that "equal" in the foregoing embodiment is not strictly "equal", with an error allowed.

The gap between the second position-limiting part 300 and the micromirror chip 100 may be set based on an actual size of the micromirror, a requirement for shock resistance, acceptable maximum stress, and the like, and is usually above 10 $\mu$m to 20 $\mu$m and below 200 $\mu$m.

Use of adhesive dispensing can also implement heights of below 10 $\mu$m or above 200 $\mu$m. A wide range of gap heights can be implemented through adhesive dispensing. Therefore, micromirror assemblies of different heights can be produced.

In some embodiments, the second adhesive layer 402 is filled with hard particles. The hard particles have a supporting effect. Sizes of the hard particles in the second adhesive layer 402 determine the thickness of the second adhesive layer 402, implementing precise control of the thickness of the adhesive layer.

In this way, a thickness of a dispensed adhesive can be controlled by doping fixed-size particles into the adhesive layer.

In some other embodiments, the first position-limiting part 200 and the second position-limiting part 300 are bonded to the fastening frame 103. FIG. 41 is a schematic diagram of a structure of another micromirror assembly according to an embodiment of this application. As shown in FIG. 41, a gold-silicon bond 500 may be used in a process of bonding the second position-limiting part 300 to the fastening frame 103.

Alternatively, FIG. 42 is a schematic diagram of a structure of another micromirror assembly according to an embodiment of this application. As shown in FIG. 42, a silicon-silicon bond 600 may be used in a process of bonding the second position-limiting part 300 to the fastening frame 103.

Of a surface that is of the first position-limiting part 200 and that is opposite the micromirror chip, a surface that is of the second position-limiting part 300 and that is opposite the micromirror chip, and surfaces of the micromirror chip, at least one surface or a collision part of at least one surface is plated or pasted with a cushioning part.

A material of the cushioning part is not limited in this embodiment of this application. The material of the cushioning part includes but is not limited to Parylene (Parylene) or polydimethylsiloxane PDMS, rubber, flexible plastic, and the like.

In this way, with the cushioning part disposed on the collision surfaces or collision parts of the first position-limiting part, the second position-limiting part, and the micromirror chip, collision cushioning can be improved, and collision stress can be reduced.

Materials of the first position-limiting part 200 and the second position-limiting part 300 are any one or more of silicon, silica, ceramic, alumina (sapphire or ruby), metal, plastic, or rubber.

A packaging structure is usually disposed outside the micromirror assembly. The micromirror chip is usually made of silicon, with thermal expansion of silicon being $2.6 \times 10^{-6}/°C$. The packaging structure is usually made of a material such as metal or plastic. There is a large difference (usually greater than $10 \times 10^{-6}/°C$ to $20 \times 10^{-6}/°C$) between coefficients of thermal expansion of the micromirror chip and the packaging structure.

In some embodiments, the first position-limiting part 200 and the second position-limiting part 300 may be fastened to the packaging structure directly. Materials of the first position-limiting part 200 and the second position-limiting part 300 may be silicon, silica, plastic, rubber, metal, or the like. The position-limiting parts may be fastened to the packaging structure by glue.

In some other embodiments, the materials of the first position-limiting part 200 and the second position-limiting part 300 may be ceramic, alumina, or the like. With high stiffness (the Young's modulus of these materials approximates 400 GPa, whereas the Young's modulus of silicon is 170 GPa), these materials are less prone to deformation. Therefore, these materials may be used as an intermediate medium between the chip and the packaging structure, to alleviate or eliminate stress of the chip generated during packaging or adhesive dispensing or generated when the chip operates or is stored at high or low temperatures, and avoid damage to or failure of the chip.

In this way, vibration resistance of the micromirror can be enhanced, and impact of packaging stress on performance of the micromirror can be alleviated or reduced.

Structures of the first position-limiting part 200 and the second position-limiting part 300 are not limited in this embodiment of this application. There are one or more first position-limiting parts 200, and there are one or more second position-limiting parts 300.

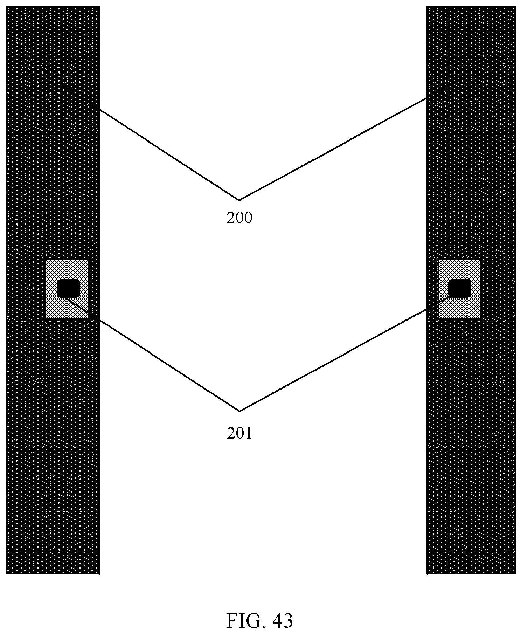

In some embodiments, as shown in FIG. 17, FIG. 19a, and FIG. 19b, the first position-limiting part 200 is of an integrated structure. As shown in FIG. 43, there are two first position-limiting parts 200.

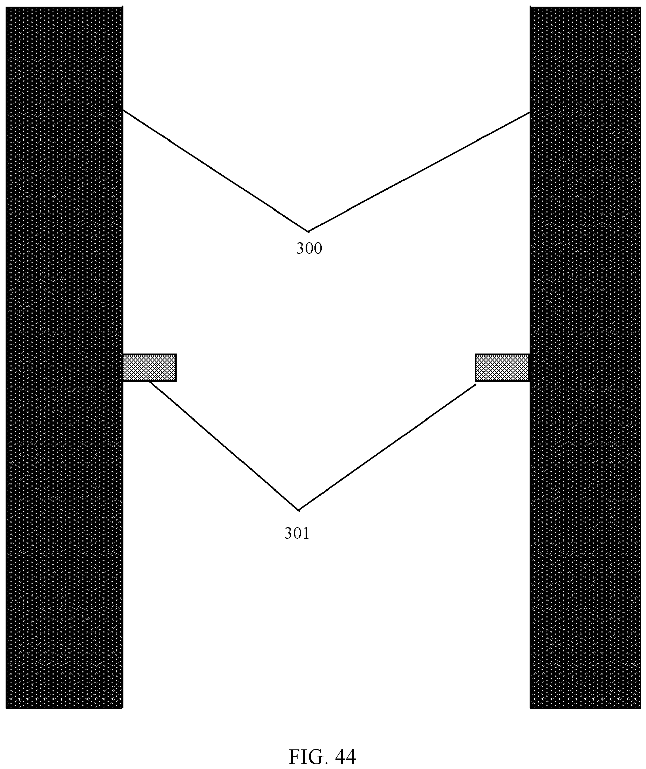

As shown in FIG. 24a, FIG. 24b, FIG. 24c, and FIG. 24d, the second position-limiting part 300 is of an integrated structure. As shown in FIG. 44, there are two second position-limiting parts 300.

In some other embodiments, alternatively, one of the first position-limiting part 200 and the second position-limiting part 300 may be of an integrated structure, and the other may be of a plurality of split structures.

In some other embodiments, the micromirror chip includes the first position-limiting part 200 and the second position-limiting part 300. Alternatively, one of the first position-limiting part 200 and the second position-limiting part 300 may be of an integrated structure, and the other may be of a plurality of split structures.

In some other embodiments, the micromirror chip includes a plurality of groups of movable parts 101 and a plurality of groups of first cantilevers 102, implementing a micromirror array function. At least one group that includes the movable part and the first cantilever is provided with the first position-limiting part and the second position-limiting part for position limiting and shock absorption on a collision.

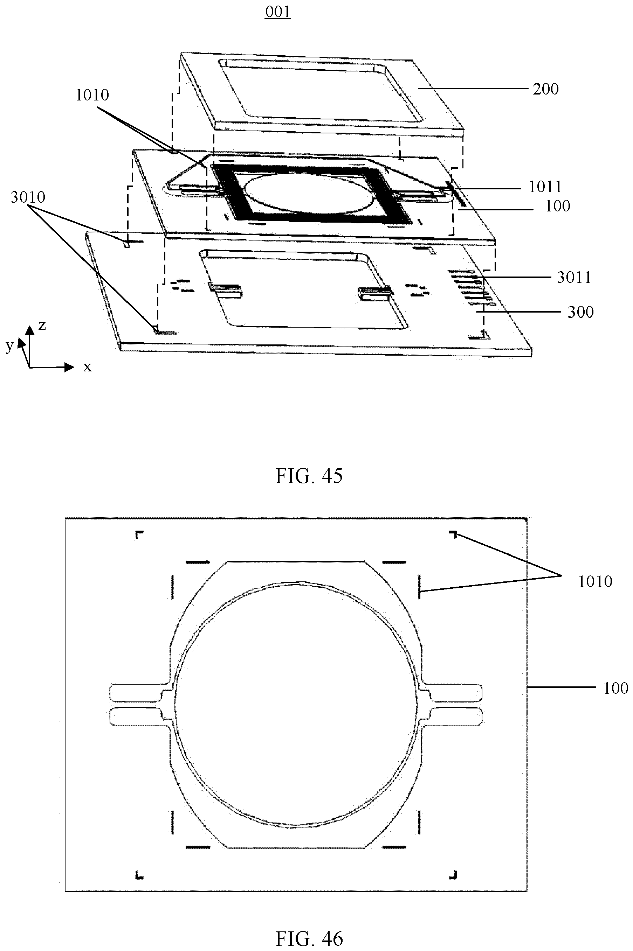

In addition, as shown in FIG. 45, FIG. 46, FIG. 47, and FIG. 48, there is a first alignment mark 1010 on the surface that is of the micromirror chip 100 and that is close to the first position-limiting part 200. The first alignment mark 1010 is used to position the first position-limiting part 200. The first alignment mark 1010 may be a metallic structure, a groove, or the like.

There is a second alignment mark 3010 on the surface that is of the second position-limiting part 300 and that is close to the micromirror chip 100. The second alignment mark 3010 is used to position the micromirror chip 100. The second alignment mark may be a metallic structure, a groove, or the like.

In this way, precision of alignment during assembly is improved, and difficulty of assembly is reduced.

The micromirror chip 100 includes a first electrode. There is a second electrode on the first position-limiting part 200 or the second position-limiting part 300. The first electrode is connected to the second electrode by a lead. In this case, an electrode and a lead may be disposed on the first position-limiting part 200 or the second position-limiting part 300 in advance, to assist in lead bonding of the chip.

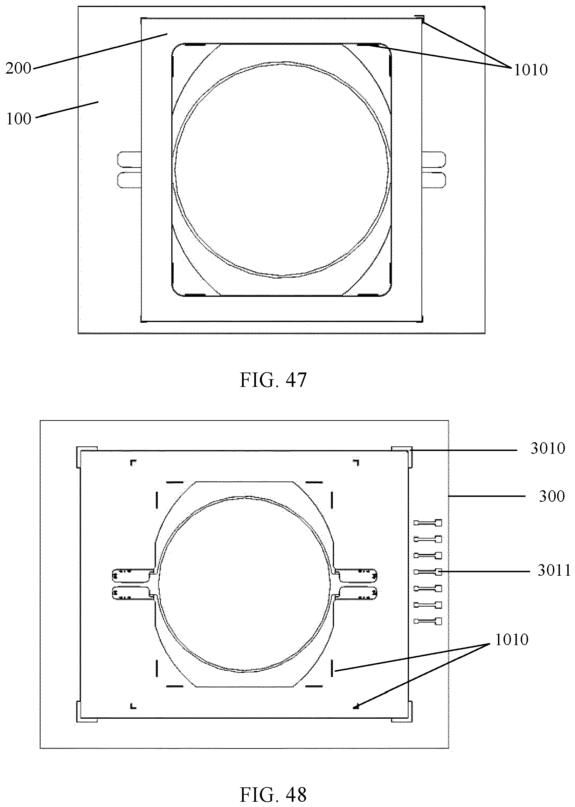

As shown in FIG. 45 and FIG. 48, a micromirror chip 100 includes a first electrode 1011, there is a second electrode 3011 on a second position-limiting part 300, and the first electrode 1011 may be connected to the second electrode 3011 by a lead.

In some embodiments, a packaging structure is further disposed outside the micromirror assembly. The second position-limiting part 300 is connected to, for example, the packaging structure.

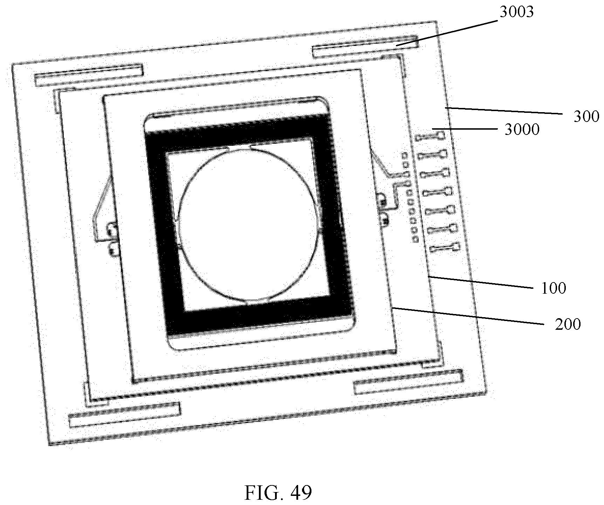

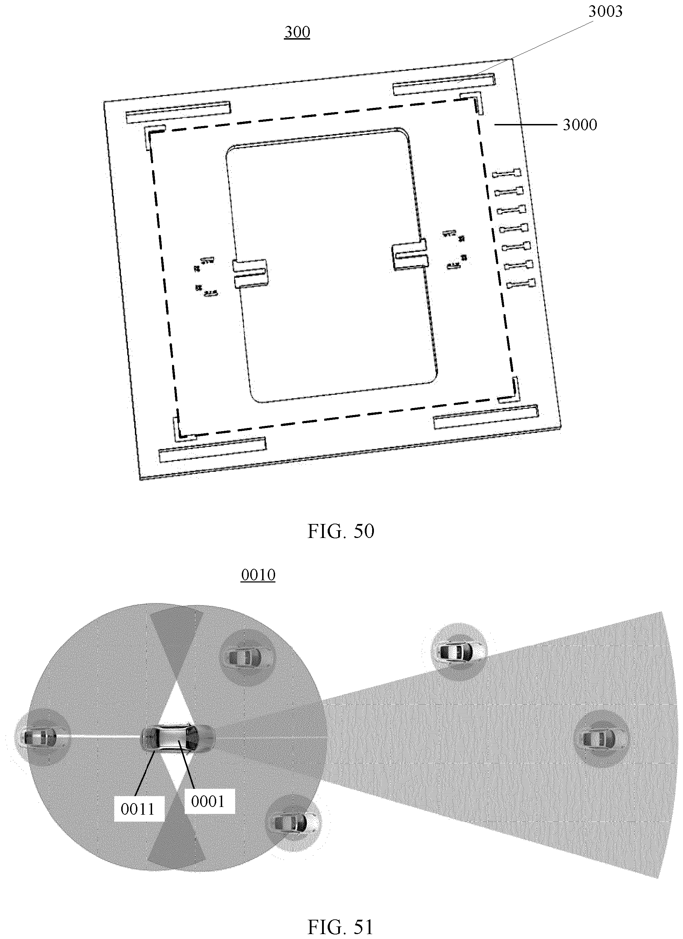

In some embodiments, as shown in FIG. 49 and FIG. 50, the second position-limiting part 300 further includes a peripheral area 3000, the peripheral area 3000 surrounds an outer border of the micromirror chip, and there is, for example, a hollow-out structure 3003 in the peripheral area 3000. In this way, a stress in a chip package can be released by the hollow-out structure 3003, avoiding damage to or failure of the chip.

An embodiment of this application further provides a laser device. As shown in FIG. 1, the laser device 0001 includes at least a laser 002 and the micromirror assembly 001 described above. The micromirror assembly 001 is configured to reflect a laser light emitted by the laser 001.

An embodiment of this application further provides a vehicle. As shown in FIG. 51, the vehicle 0010 includes a vehicle 0011 itself and the laser device 0001 described above. The laser device 0001 is disposed on the vehicle 0011 itself.

The foregoing descriptions are merely specific implementations of this application, but the scope of protection of this application is not limited thereto. Any variation or replacement within the technical scope disclosed in this application shall fall within the scope of protection of this application. Therefore, the scope of protection of this application shall be subject to the scope of protection of the claims.

## Claims

1. A micromirror assembly, comprising a first position-limiting part, a micromirror chip, and a second position-limiting part that are stacked, wherein

   the micromirror chip comprises a fastening frame, a movable part, and a first cantilever, wherein the movable part is connected to the fastening frame by the first cantilever;
   the first position-limiting part and the second position-limiting part are separately connected to the fastening frame, the first position-limiting part and the second position-limiting part have a hollow area, and the hollow areas are opposite to the movable part;

the first position-limiting part is configured to absorb shock on a collision with the micromirror chip, and a projection of a collision part of the first position-limiting part on the micromirror chip intersects with a central axis of the first cantilever; and

the second position-limiting part is configured to absorb shock on a collision with the micromirror chip.

2. The micromirror assembly according to claim 1, wherein a distance between the second position-limiting part and a device layer of the micromirror chip is greater than a distance between the second position-limiting part and a substrate layer of the micromirror chip, there is a protruding first position-limiting structure on the micromirror chip, and the first position-limiting structure is configured to absorb shock on a collision with the second position-limiting part.

3. The micromirror assembly according to claim 2, wherein a projection of a part that is of the first position-limiting structure and that collides with the second position-limiting part on the micromirror chip intersects with the central axis of the first cantilever.

4. The micromirror assembly according to any one of claims 1 to 3, wherein a distance between the first position-limiting part and the device layer of the micromirror chip is less than a distance between the first position-limiting part and the substrate layer of the micromirror chip, there is a first protrusion on the first position-limiting part, and the first protrusion is configured to absorb shock on a collision with the micromirror chip.

5. The micromirror assembly according to claim 4, wherein a projection of the first protrusion on the micromirror chip intersects with the central axis of the first cantilever.

6. The micromirror assembly according to any one of claims 1 to 3, wherein there is a first stopper part between the first cantilever and the movable part, and the first position-limiting part is configured to absorb shock on a collision with the first stopper part.

7. The micromirror assembly according to claim 6, wherein a width of the first stopper part is greater than a width of the first cantilever.

8. The micromirror assembly according to claim 5, wherein there is also a first avoidance groove on the first position-limiting part, an opening of the first avoidance groove is opposite a first stopper part, the first protrusion is provided in the first avoidance groove, there is the first stopper part between the first cantilever and the movable part, a width of the first stopper part is greater than a width of the first cantilever, and the first stopper part is configured to absorb shock on a collision with the first protrusion.

9. The micromirror assembly according to claim 5, wherein the first protrusion is located in the hollow area of the first position-limiting part, there is a first stopper part between the first cantilever and the movable part, a width of the first stopper part is greater than a width of the first cantilever, and the first stopper part is configured to absorb shock on a collision with the first protrusion.

10. The micromirror assembly according to any one of claims 1 to 9, wherein there is a protruding second position-limiting structure on the micromirror chip, and the first position-limiting part is configured to absorb shock on a collision with the second position-limiting structure.

11. The micromirror assembly according to claim 10, wherein a projection of the second position-limiting structure on the micromirror chip intersects with the central axis of the first cantilever.

12. The micromirror assembly according to any one of claims 1 to 11, wherein the first position-limiting structure is located at a position at which the first cantilever and the movable part are connected.

13. The micromirror assembly according to claim 12, wherein the second position-limiting part is of a flat plate structure.

14. The micromirror assembly according to any one of claims 1 to 11, wherein the first position-limiting structure exists on a surface that is of the movable part and that is away from the first position-limiting part.

15. The micromirror assembly according to claim 12 or 14, wherein there are a second protrusion and a second avoidance groove on the second position-limiting part, an opening of the second avoidance groove is opposite the position-limiting structure, and the second protrusion is provided in the second avoidance groove.

16. The micromirror assembly according to claim 12 or 14, wherein there is a second protrusion on the second position-limiting part, the second protrusion is opposite the position-limiting structure, and the second protrusion is located in the hollow area of the second position-limiting part.

17. The micromirror assembly according to claim 15 or 16, wherein a projection of the second protrusion on the micromirror chip intersects with the central axis of the first cantilever.

18. The micromirror assembly according to any one of claims 1 to 17, wherein the movable part comprises a micromirror, and the micromirror is connected to the fastening frame by the first cantilever.

19. The micromirror assembly according to any one of claims 1 to 17, wherein the movable part comprises a movable frame, the movable frame is disposed around a micromirror, the fastening frame is disposed around the movable frame, the movable frame is connected to the micromirror by a second cantilever, and the movable frame is connected to the fastening frame by the first cantilever.

20. The micromirror assembly according to any one of claims 1 to 19, wherein the first position-limiting part is connected to the fastening frame by a first adhesive layer, and a height of a gap between the first position-limiting part and the micromirror chip is equal to a thickness of the first adhesive layer.

21. The micromirror assembly according to claim 20, wherein the first adhesive layer is filled with hard particles.

22. The micromirror assembly according to any one of claims 1 to 19, wherein the first position-limiting part is bonded to the fastening frame.

23. The micromirror assembly according to any one of claims 1 to 19, wherein the second position-limiting part is connected to the fastening frame by a second adhesive layer, and a height of a gap between the second position-limiting part and the micromirror chip is equal to a thickness of the second adhesive layer.

24. The micromirror assembly according to claim 23, wherein the second adhesive layer is filled with hard particles.

25. The micromirror assembly according to any one of claims 1 to 19, wherein the second position-limiting part is bonded to the fastening frame.

26. The micromirror assembly according to any one of claims 1 to 25, wherein of a surface that is of the first position-limiting part and that is opposite the micromirror chip, a surface that is of the second position-limiting part and that is opposite the micromirror chip, and surfaces of the micromirror chip, at least one surface or a collision part of at least one surface is plated or pasted with a cushioning part.

27. The micromirror assembly according to claim 26, where a material of the cushioning part is Parylene Parylene, polydimethylsiloxane PDMS, rubber, or soft rubber.

28. The micromirror assembly according to any one of claims 1 to 27, wherein materials of the first position-limiting part and the second position-limiting part are any one or more of silicon, silica, alumina, ceramic, metal, plastic, or rubber.

29. The micromirror assembly according to any one of claims 1 to 28, wherein there are one or more first position-limiting parts.

30. The micromirror assembly according to any one of claims 1 to 28, wherein there are one or more second position-limiting parts.

31. The micromirror assembly according to any one of claims 1 to 30, wherein there is a first alignment mark on the surface that is of the micromirror chip and that is close to the first position-limiting part, and the first alignment mark is used to position the first position-limiting part.

32. The micromirror assembly according to any one of claims 1 to 30, wherein there is a second alignment mark on the surface that is of the second position-limiting part and that is close to the micromirror chip, and the second alignment mark is used to position the micromirror chip.

33. The micromirror assembly according to any one of claims 1 to 30, wherein the micromirror chip comprises a first electrode, there is a second electrode on the first position-limiting part or the second position-limiting part, and the first electrode is connected to the second electrode by a lead.

34. The micromirror assembly according to any one of claims 1 to 30, wherein the part that is of the first position-limiting part and that collides with the micromirror chip is connected to the first position-limiting part by a first movable arm.

35. The micromirror assembly according to any one of claims 1 to 30, wherein the part that is of the second position-limiting part and that collides with the micromirror chip is connected to the first position-limiting part by a second movable arm.

36. The micromirror assembly according to any one of claims 1 to 30, wherein the second position-limiting part further comprises a peripheral area, the peripheral area surrounds an outer border of the micromirror chip, and there is a hollow-out structure in the peripheral area.

37. A laser device, comprising a laser and the micromirror assembly according to any one of claims 1 to 36, wherein the micromirror assembly is configured to reflect a laser light emitted by the laser.

38. A vehicle, comprising a vehicle itself and the laser device according to claim 37, wherein the laser device is disposed on the vehicle itself.

FIG. 1

FIG. 2

FIG. 3

FIG. 4

FIG. 5

FIG. 6

FIG. 7

001

FIG. 8

FIG. 9

EP 4 328 649 A1

FIG. 10a

FIG. 10b

25

Perform etching on a first surface of a silicon chip, to form a first protrusion and a first avoidance groove

S101

Perform etching on a second surface of the silicon chip, to form a hollow area

S102

FIG. 11

FIG. 11a

FIG. 11b

FIG. 12

FIG. 13

FIG. 14a

FIG. 14b

FIG. 15

FIG. 16

FIG. 17

FIG. 18a

FIG. 18b

200

FIG. 19

FIG. 19a

200

2001

FIG. 19b

201

104

103

FIG. 20a

d

h

θ

FIG. 20b

FIG. 21a

FIG. 21b

300

D

3001

302    301

FIG. 22

S201

Perform etching on a first surface of a silicon chip, to form
a second protrusion and a second avoidance groove

S202

Perform etching on a second surface of the silicon chip, to
form a hollow area

FIG. 22a

FIG. 22b

FIG. 22c

301

302

FIG. 22d

101

105

103

104

102

C

C

FIG. 23

FIG. 24a

FIG. 24b

FIG. 24c

FIG. 24d

FIG. 24e

FIG. 25

FIG. 26

FIG. 27a

FIG. 27b

106

303

FIG. 28

300

FIG. 29a

302                601

FIG. 29b

FIG. 30a

FIG. 30b

FIG. 31a

FIG. 31b

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

001

FIG. 45

FIG. 46

FIG. 47

FIG. 48

FIG. 49

300

3003

3000

FIG. 50

0010

0011    0001

FIG. 51

## INTERNATIONAL SEARCH REPORT

| International application No. |
|---|
| **PCT/CN2022/091559** |

| A. | CLASSIFICATION OF SUBJECT MATTER |
|---|---|

G02B 26/08(2006.01)i

According to International Patent Classification (IPC) or to both national classification and IPC

| B. | FIELDS SEARCHED |
|---|---|

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, WPI, EPODOC, CNKI: 微镜, 激光, 臂, 梁, 框架, 中框, 外框, 限位, 止挡, 防震, 防震, 震动, 振动, 碰撞, MEMS, micro+mirror+, limit+, movement, suspen+, frame?, beam?, support+, ax?s

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111830701 A (HUAWEI TECHNOLOGIES CO., LTD.) 27 October 2020 (2020-10-27) description, paragraphs [0062]-[0113], and figures 1-34 | 1-38 |
| A | CN 211506023 U (WUXI V SENSOR TECH CO., LTD.) 15 September 2020 (2020-09-15) entire document | 1-38 |
| A | CN 102298207 A (WUXI WIO TECHNOLOGY CO., LTD.) 28 December 2011 (2011-12-28) entire document | 1-38 |
| A | CN 106066535 A (WUXI WIO TECHNOLOGY CO., LTD.) 02 November 2016 (2016-11-02) entire document | 1-38 |
| A | CN 102103263 A (SHANGHAI INSTITUTE OF MICROSYSTEM AND INFORMATION TECHNOLOGY, CHINESE ACADEMY OF SCIENCES) 22 June 2011 (2011-06-22) entire document | 1-38 |
| A | CN 104597596 A (SUZHOU INDUSTRIAL PARK NANO INDUSTRY TECHNOLOGY RESEARCH INSTITUTE CO., LTD.) 06 May 2015 (2015-05-06) entire document | 1-38 |
| A | CN 205787359 U (HISENSE GROUP) 07 December 2016 (2016-12-07) entire document | 1-38 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 July 2022** | **01 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/091559** |

### C. DOCUMENTS CONSIDERED TO BE RELEVANT

| Category* | Citation of document, with indication, where appropriate, of the relevant passages | Relevant to claim No. |
|---|---|---|
| A | CN 208921969 U (SHANGHAI XINHUI TECH CO., LTD.) 31 May 2019 (2019-05-31) entire document | 1-38 |
| A | JP 2007058105 A (MATSUSHITA ELECTRIC WORKS LTD.) 08 March 2007 (2007-03-08) entire document | 1-38 |

Form PCT/ISA/210 (second sheet) (January 2015)

**INTERNATIONAL SEARCH REPORT**
**Information on patent family members**

International application No.

**PCT/CN2022/091559**

| Patent document cited in search report | | | Publication date (day/month/year) | Patent family member(s) | | | Publication date (day/month/year) |
|---|---|---|---|---|---|---|---|
| CN | 111830701 | A | 27 October 2020 | CN | 111830701 | B | 15 February 2022 |
| CN | 211506023 | U | 15 September 2020 | CN | 211506023 | U | 15 September 2020 |
| CN | 102298207 | A | 28 December 2011 | CN | 102298207 | B | 11 June 2014 |
| CN | 106066535 | A | 02 November 2016 | None | | | |
| CN | 102103263 | A | 22 June 2011 | CN | 102103263 | B | 08 June 2016 |
| CN | 104597596 | A | 06 May 2015 | CN | 104597596 | B | 29 September 2017 |
| CN | 205787359 | U | 07 December 2016 | None | | | |
| CN | 208921969 | U | 31 May 2019 | None | | | |
| JP | 2007058105 | A | 08 March 2007 | None | | | |

Form PCT/ISA/210 (patent family annex) (January 2015)

**REFERENCES CITED IN THE DESCRIPTION**

**Patent documents cited in the description**

- CN 202110900524
- CN 202110529736